(19) Europäisches Patentamt / European Patent Office / Office européen des brevets

(11) **EP 2 412 464 B2**

(12) **NEW EUROPEAN PATENT SPECIFICATION**
After opposition procedure

(45) Date of publication and mention
of the opposition decision:
**08.12.2021 Bulletin 2021/49**

(45) Mention of the grant of the patent:
**05.04.2017 Bulletin 2017/14**

(21) Application number: **10755810.8**

(22) Date of filing: **26.02.2010**

(51) Int Cl.:
**B23C 5/10** *(2006.01)*    **B23B 27/14** *(2006.01)*
**B23C 5/06** *(2006.01)*    **B23C 5/20** *(2006.01)*

(86) International application number:
**PCT/JP2010/053104**

(87) International publication number:
**WO 2010/110009 (30.09.2010 Gazette 2010/39)**

(54) **MILLING CUTTER**

FRÄSWERKZEUG

OUTIL DE FRAISAGE

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **24.03.2009 JP 2009098439**
**10.06.2009 JP 2009156147**
**30.10.2009 JP 2009264352**

(43) Date of publication of application:
**01.02.2012 Bulletin 2012/05**

(73) Proprietor: **Mitsubishi Hitachi Tool Engineering, Ltd.**
**Tokyo 130-0026 (JP)**

(72) Inventors:
• **KOBAYASHI Yoshiyuki**
**Narita-shi, Chiba 286-0825 (JP)**
• **NAGAFUCHI Kenji**
**Narita-shi, Chiba 286-0825 (JP)**
• **MURA Hisanori**
**Narita-shi, Chiba 286-0825 (JP)**

• **NAGASHIMA Yoshimitsu**
**Sumida-ku, Tokyo 130-0026 (JP)**

(74) Representative: **Hoffmann Eitle**
**Patent- und Rechtsanwälte PartmbB**
**Arabellastraße 30**
**81925 München (DE)**

(56) References cited:
EP-A1- 0 207 914        EP-A2- 1 005 935
EP-A2- 1 066 903        DE-C1- 10 006 431
IN-A- 2007 DE2 109      JP-A- 6 155 127
JP-A- 8 039 308         JP-A- H0 976 104
JP-A- S5 596 259        JP-A- 2000 005 921
JP-A- 2002 046 002      JP-A- 2004 291 099
JP-A- 2005 169 511      JP-A- 2010 069 578
JP-U- 2 035 616         JP-U- 2 053 302
JP-U- 56 038 717        US-A- 6 116 824
US-A1- 2006 216 122

• **"Modern metal cutting" In: "A practical handbook", 1994 ISBN: 91-972299-0-3 pages VI-31 and X-76-X-79,**

EP 2 412 464 B2

**Description**

TECHNICAL FIELD

The present invention relates to an indexable milling cutter according to the preamble of claim 1, which is capable of achieving a reduction in cutting resistance while maintaining chipping resistance of a main cutting edge, and which is suitable for high-feed processing enabling a high efficient processing.

BACKGROUND ART

When various dies are manufactured by a molding process, a plate-shaped insert (insert tip) having a polygonal shape such as a rhombic or generally parallelogram shape, a round shape (circular shape), or the like, as seen in a plan view is attached to a tool body of a cutting tool so as to perform high-feed processing on a die material which is a workpiece.

When a high-feed processing is performed on a workpiece by using an indexable milling cutter with an insert attached thereto as described above, the cutting edge of the insert is likely to undergo problems such as chipping. In view of this, various techniques have been proposed in which the shape and the like of the insert are improved in order to prevent problems such as chipping from occurring on the cutting edge of the insert even if high-feed processing is performed. For example, there have been proposed conventional technologies described in Patent Documents identified below.

A technology described in Patent Document 1 (Japanese Patent Application Laid-Open JP-A-2000-5921) aims at providing an indexable milling cutter according to the preambles of claims 1, 5 and 10 with a reduced chattering vibration when cutting corner portions and grooves, thus realizing a stable high-efficient processing with reduced chip chipping troubles.

It proposes an indexable milling cutter wherein the insert includes a main cutting edge and a peripheral cutting edge, the cutting angle of the main cutting edge is 3° or more and 35° or less, the main cutting edge forms a circular arc or a circular arc-like shape, and the peripheral cutting edge forms a straight line or a circular arc or a circular arc-like shape so as to be back-tapered with respect to the tool center axis.

A technology described in Patent Document 2 (Japanese Patent Application Laid-Open JP-A-2002-046 002) proposes an insert suitable for cutting a workpiece with a hard layer such as black scale formed on the surface thereof. It discloses that in this insert, the honing width and the honing angle of the honing surface of the main cutting edge are gradually increased toward the central portion from the opposite end portions of the main cutting edge.

It is suggested that the honing width is set in a range of 0.05 to 0.5 mm at the opposite end portions of the main cutting edge and in a range of 0.1 to 1.0 mm in the central portion of the main cutting edge, and the honing angle is set in a range of 5 to 45° at the opposite end portions of the main cutting edge and in a range of 10 to 60° in the central portion of the main cutting edge.

A technology described in Patent Document 3 (Japanese Patent Application Laid-Open JP-A-2002-192 407) proposes a cutting tool for use in finish cutting such that the cutting amount is set to the range of the circular arc-shaped cutting edge of the nose of the insert, aiming at increasing the lifetime of the tool without causing a decrease in the finish surface roughness.

It is disclosed that the insert used in this cutting tool is provided with a chamfer portion along the circular arc-shaped cutting edge of the nose, wherein the chamfer width along the circular arc-shaped cutting edge as seen from the rake face side is gradually increased toward the generally middle point of the circular arc of the circular arc-shaped cutting edge from the vicinity of each of the connecting points between the circular arc-shaped cutting edge and the two linear cutting edges allowing the nose to be interposed therebetween.

Thus, cutting can be done while positioning a circular arc-shaped cutting edge portion with a smaller chamfer width closer to the front clearance boundary and positioning a circular arc-shaped cutting edge portion with a larger chamfer width closer to the side clearance boundary, thereby increasing the lifetime of the tool without causing a decrease in the finish surface roughness.

A technology described in Patent Document 4 (Japanese Patent Application Laid-Open Japanese Patent Application Laid-Open JP-A-2008-837) proposes an insert of which the cutting performance does not possibly deteriorate. This insert is an insert having a generally polygonal plate shape with cutting edges formed along opposing ridge portions of the polygonal surface.

The insert includes at least one boss surface provided at the central portion of each polygonal surface, a breaker groove provided between the boss surface and the cutting edge, and a land surface extending inwardly from the cutting edge along the cutting edge.

It is stated that in at least one corner portion of the polygonal surface, the width L2 of the land surface along a pair of linear cutting edges extending from different corner cutting edges is set to be larger than the width L1 of the land surface along the corner cutting edges, and the distance L4 between the linear cutting edge and the boss surface is set to be smaller than the distance L3 between the corner tip of the corner cutting edge and the boss surface.

Thus, it intends to increase cutting edge strength of the linear cutting edge with a relatively high load without detracting the cutting quality of the corner cutting edge which has a significant influence on the cutting resistance and the surface roughness of the finished surface.

A technology described in Patent Document 5 (Japanese Patent Application Laid-Open JP-A-2008-207 273) proposes a cutting tool with which it is possible to prevent damages occurring due to the temperature difference when cutting with the cutting edge near a corner portion of the insert. This insert has a polygonal plate shape, wherein the crossing ridge between the rake face and the flank face is used as the cutting edge, a round cutting edge is provided at the corner portion of the rake face, a land is provided having a uniform width over the rake face and a peripheral portion continuous with the cutting edge, and a breaker groove is provided on the central side of the rake face continuous with at least the land of the corner portion.

It is also disclosed that a notch is provided in the side portion cutting edge continuous with the round cutting edge, and the distance from the extrapolated vertex p1 of the corner portion of the notch is set to be 0.2L1 or less with respect to the length L1 of one side of the cutting edge.

A technology described in Patent Document 6 (Japanese Patent Application Laid-Open JP-A-Hei 4-093 110) proposes a face mill with a round insert (round chip) attached thereto, wherein the cutting tip configuration, the attachment configuration, etc., of the round insert are improved so that it is suitable for heat resistant steel, etc. This round insert forms a generally circular plate shape with a relief angle on the circumferential surface thereof, and the circumferential surface includes six slant planes formed by linear ridges and six slant circular arc planes formed by circular arc ridges that are larger than the linear ridges.

It discloses that the round insert is positioned by a locator that is present in the attachment groove of the cutter body, and the locator positions the round insert in such a direction that the linear ridges, which contribute to the cutting, extend perpendicular to the axial direction of the cutter body.

A technology described in Patent Document 7 (Japanese Patent Application Laid-Open JP-A-Hei 9-225 724) proposes a round insert (round chip) for a milling cutter with reduced chipping and breaking and with which the lifetime of the cutting edge can be increased even with cutting processes of hard materials. It discloses that this round insert includes a plurality of cutting edge rake faces provided along the outer periphery of the insert body which has a relief angle across the entire circumference, and these cutting edge rake faces are formed in a circular arc shape that protrudes toward the upper surface as seen in a side view.

It is stated that by thus forming the cutting edge rake faces in a circular arc shape that protrudes toward the upper surface as seen in a side view, when the cutting edge rake face contacts the work piece, the tallest portion of the protrusion first contacts the workpiece and then the contact is made gradually with lower portions of the protrusion. Therefore, the contact time can be elongated to reduce the impact force, thus reducing chipping and breaking, and allowing for an increase in the lifetime of the cutting edge even with cutting processes of hard materials.

CITATION LIST

PATENT DOCUMENTS

Patent Document 1: Japanese Patent Application Laid-Open JP-A-2000-5921
Patent Document 2: Japanese Patent Application Laid-Open JP-A-2002-46002
Patent Document 3: Japanese Patent Application Laid-Open JP-A-2002-192 407
Patent Document 4: Japanese Patent Application Laid-Open JP-A-2008-837
Patent Document 5: Japanese Patent Application Laid-Open JP-A-2008-207 273
Patent Document 6: Japanese Patent Application Laid-Open JP-A-Hei 4-093 110
Patent Document 7: Japanese Patent Application Laid-Open JP-A-Hei 9-22 5724

SUMMARY OF INVENTION

PROBLEMS TO BE SOLVED BY THE INVENTION

Although the technologies described in Patent Documents 1 to 5 identified above propose inserts having a triangular shape or a generally quadrilateral shape as seen in a plan view or cutting tools with these inserts attached thereto, all of these technologies fail to describe achieving a configuration suitable for high-feed processing enabling highly efficient processing, which realizes a reduction in cutting resistance while maintaining chipping resistance of the main cutting edge formed on the insert.

That is, with the indexable milling cutter described in Patent Document 1, the insert includes a main cutting edge and a peripheral cutting edge, the cutting angle of the main cutting edge is 3° or more and 35° or less, the main cutting edge forms a circular arc or a circular arc-like shape, and the peripheral cutting edge forms a straight line or a circular arc or a circular arc-like shape so as to be back-tapered with respect to the tool center axis, thereby reducing chattering vibration when cutting corner portions and grooves and reducing insert tipping troubles.

Thus, it fails to disclose a measure for realizing a reduction in the cutting resistance during cutting, e.g., giving consideration to widths of the negative honing and the land formed in the cutting edge portion of the insert.

In the insert described in Patent Document 2, the honing width and the honing angle of the honing surface of the main cutting edge are gradually increased toward the central portion from the opposite end portions of the main cutting edge, thereby improving the chipping resistance in the central portion rather than in the opposite end portions of the cutting edge. Thus, the technology described in Patent Document 2 also fails to disclose a measure for realizing a reduction in the cutting resistance during cutting.

In the cutting tool described in Patent Document 3, a chamfer portion is provided along the circular arc-shaped cutting edge of the nose of the insert in order to increase the lifetime of the tool without causing a decrease in the finish surface roughness, wherein the chamfer (the negative honing, etc.) width along the circular arc-shaped cutting edge as seen from the rake face side is gradually increased toward the generally middle point of the circular arc of the circular arc-shaped cutting edge from the vicinity of each of the connecting points between the circular arc-shaped cutting edge and the two linear cutting edges interposing the nose therebetween.

It is stated that it is thus possible to cut while positioning a circular arc-shaped cutting edge portion with a smaller chamfer width closer to the front clearance boundary and positioning a circular arc-shaped cutting edge portion with a larger chamfer width closer to the side clearance boundary, thereby increasing the lifetime of the tool without causing a decrease in the finish surface roughness. However, the technology described in Patent Document 3 also fails to disclose a measure for realizing a reduction in the cutting resistance during cutting.

The insert described in Patent Document 4 includes at least one boss surface provided at the central portion of each polygonal surface, a breaker groove provided between the boss surface and the cutting edge, and a land surface extending inwardly from the cutting edge along the cutting edge. In at least one corner portion of the polygonal surface, the width L2 of the land surface along a pair of linear cutting edges extending from different corner cutting edges is set to be larger than the width L1 of the land surface along the corner cutting edges, thereby preventing the linear cutting edges from chipping and breaking. Therefore, the technology described in Patent Document 4 also fails to disclose a measure for realizing a reduction in the cutting resistance during cutting.

In the insert described in Patent Document 5, a round cutting edge is provided at the corner portion of the rake face, a land is provided having a uniform width over the rake face and a peripheral portion continuous with the cutting edge, and a notch is provided in the side portion cutting edge continuous with the round cutting edge, thereby preventing damages such as chipping of the cutting edge occurring due to the temperature difference when cutting. However, the technology described in Patent Document 5 also fails to disclose a measure for realizing a reduction in the cutting resistance during cutting.

The round insert described in Patent Document 6 forms a generally circular plate shape with a relief angle on the circumferential surface thereof, and the circumferential surface includes six slant planes formed by linear ridges and six slant circular arc planes formed by circular arc ridges that are larger than the linear ridges, thereby improving damages to the cutting edge during cutting process on heat resistant steel, etc. The technology described in Patent Document 6 also fails to disclose a measure for realizing a reduction in the cutting resistance during cutting.

The round insert described in Patent Document 7 includes a plurality of cutting edge rake faces provided along the outer periphery of the insert body which has a relief angle across the entire circumference, and these cutting edge rake faces are formed in a circular arc shape that protrudes toward the upper surface as seen in a side view, thereby reducing chipping and breaking of the cutting edge. However, the technology described in Patent Document 7 also fails to disclose a measure for realizing a reduction in the cutting resistance during cutting.

It is therefore an object of the present invention to provide an indexable milling cutter including an insert attached to a cutter body so that it can be attached/detached to/from the cutter body, which can achieve a reduction in cutting resistance while maintaining the chipping resistance of the main cutting edge formed on the insert, and which is suitable for high-feed processing enabling highly efficient processing.

MEANS FOR SOLVING PROBLEMS

In order to solve the above problems, a milling cutter in accordance with claim 1 is provided.

Further, the invention recited in claim 2 is an indexable milling cutter according to claim 1, wherein

$$0.03 \text{ mm} \leq H1 \leq 0.10 \text{ mm}, \ 0.15 \leq H1/H2 \leq 0.50,$$

$$0.03 \text{ mm} \leq F1 \leq 0.10 \text{ mm}, \ 0.15 \leq F1/F2 \leq 0.50,$$

are satisfied, where H1 denotes the width of the negative honing and F1 denotes the width of the land at the lowermost point, and H2 denotes the width of the negative honing and F2 denotes the width of the land at the connecting portion.

Further, the invention recited in claim 3 is an indexable milling cutter according to any one of claims 1 or 2, wherein a plurality of grooves elongated in a direction generally perpendicular to a tangent of the main cutting edge are provided on an upper surface of the insert in a vicinity of the main cutting edge; and portions between the grooves are used as rake faces.

Further, the invention recited in claim 4 is an indexable milling cutter according to claim 3, wherein

$$0.20 \text{ mm} \leq RW \leq 0.50 \text{ mm}, \ 1.20 \leq RW/UW \leq 2.50,$$

$$UH \leq 0.60 \text{ mm}, \ 0.25 \text{ mm} \leq UL \leq 0.80 \text{ mm},$$

are satisfied, where, at the connecting portion, RW denotes a width of the rake face between the grooves, UW denotes a transverse width of the groove, UH denotes a longitudinal length of the groove, and UL denotes a length from the ridge line portion of the main cutting edge to an end of the groove.

EFFECT OF THE INVENTION

According to the indexable milling cutter of the present invention, when the insert is attached to the cutter body of the indexable milling cutter, the attached insert has a portion which is the lowermost point of the cutter body (indexable milling cutter), and the width of the honing or the widths of the honing and the land provided in the insert gradually increase from the lowermost point toward the outer periphery side of the cutter body. Thus, it is possible to provide the indexable milling cutter which is capable of achieving a reduction in cutting resistance while maintaining the chipping resistance of the main cutting edge of the insert.

BRIEF DESCRIPTION OF DRAWINGS

Fig. 1     A diagram for illustrating a procedure of attaching an insert of an indexable milling cutter according to a first embodiment of the invention of the present application.
Fig. 2     A front view of the indexable milling cutter showing a state where the insert is attached in Fig. 1.
Fig. 3(a)     shows a partially enlarged diagram for illustrating the configuration of the insert shown in Fig. 2, and
Fig. 3(b)     shows a partially enlarged diagram for illustrating the configuration of another embodiment of the insert shown in Fig. 2.
Fig. 4     A perspective view for illustrating the configuration of the insert shown in Fig. 2.
Fig. 5     A cross-sectional view showing a cross section taken along line A-A of the insert shown in Fig. 4.
Fig. 6     A cross-sectional view showing a cross section taken along line B-B of the insert shown in Fig. 4.
Fig. 7     An enlarged view for illustrating portions of a main cutting edge of the insert shown in Fig. 4.
Fig. 8     A cross-sectional view showing a cross section taken along line C-C of the insert shown in Fig. 4.
Fig. 9     A plan view showing another embodiment of the insert to be attached to the indexable milling cutter of the first embodiment of the invention of the present application.
Fig. 10     A plan view showing still another embodiment of the insert to be attached to the indexable milling cutter of the first embodiment of the invention of the present application.
Fig. 11     A front view showing a second embodiment of an indexable milling cutter which is not part of the invention
Fig. 12     A perspective view for illustrating the configuration of the insert shown in Fig. 11.
Fig. 13     An enlarged view showing the insert portion shown in Fig. 11 on an enlarged scale.
Fig. 14     A plan view for illustrating the configuration of an upper surface of the insert shown in Fig. 11.
Fig. 15     A side view on the side of a short side of the insert shown in Fig. 11.
Fig. 16     A cross-sectional view of a main cutting edge portion of the insert shown in Fig. 11.
Fig. 17     An enlarged view of the main cutting edge portion of the insert shown in Fig. 11.
Fig. 18     A diagram for illustrating an angle a between a line which passes through a highest point in terms of a height from a lower surface of an insert to the main cutting edge and which is parallel to the lower surface of the insert and a line which connects the highest point with a lowest point in terms of the height from the lower surface of the insert to the main cutting edge and a radial rake angle Rr in the indexable milling cutter shown in Fig. 11.

Fig. 19    A front view showing a third embodiment of an indexable milling cutter which is not part of the invention.
Fig. 20    A perspective view for illustrating the configuration of the insert shown in Fig. 19.
Fig. 21    A cross-sectional view showing a cross section taken along line D-D of the insert shown in Fig. 20.
Fig. 22    A cross-sectional view showing a cross section taken along line E-E of the insert shown in Fig. 20.
Fig. 23    An enlarged view of a main cutting edge portion of the insert shown in Fig. 19.
Fig. 24    A plan view showing another embodiment of the insert to be attached to the indexable milling cutter of the third embodiment.
Fig. 25    A plan view showing still another embodiment of the insert to be attached to the indexable milling cutter of the third embodiment.
Fig. 26    A perspective view for illustrating the shape of a workpiece used for evaluating chipping resistance by heavy interrupted cutting of the indexable milling cutter of the present invention.

## MODES FOR CARRYING OUT THE INVENTION

### First Embodiment of the Invention

Embodiments of an indexable milling cutter of the present invention will now be described with reference to drawings. First, a first embodiment of the invention of the present application will be described. Characteristics of the first embodiment are as follows as described above.

That is, the characteristic of the first embodiment of the present application is an indexable milling cutter including an insert attached thereto which can be attached to and detached from a cutter body and which has a polygonal plate shape as seen in a plan view, wherein:

a ridge line portion of a main cutting edge of the insert forms a protruding shape in an outward direction of the insert;
a negative honing, a land, and a breaker groove are provided on a rake face of the main cutting edge; and a generally rounded corner cutting edge is formed in a connecting portion between two adjacent sides;
when the insert is attached to the cutter body, the main cutting edge of the insert has a lowermost point in the cutter body; and
a width of the negative honing is formed so as to gradually increase from the lowermost point in the cutter body toward the connecting portion.

In the first embodiment of the present application, a width of the land is preferably formed so as to gradually increase from the lowermost point in the cutter body toward the connecting portion. That is, while the width of the negative honing is formed so as to gradually increase from the lowermost point in the cutter body toward the connecting portion, it is also desirable that the width of the land is preferably formed so as to gradually increase from the lowermost point toward the connecting portion.

In the first embodiment, it is preferred that

$$0.03 \text{ mm} \leq H1 \leq 0.10 \text{ mm}, \ 0.15 \leq H1/H2 \leq 0.50,$$

$$0.03 \text{ mm} \leq F1 \leq 0.10 \text{ mm}, \ 0.15 \leq F1/F2 \leq 0.50,$$

are satisfied, where $H1$ denotes the width of the negative honing and $F1$ denotes the width of the land at the lowermost point, and $H2$ denotes the width of the negative honing and $F2$ denotes the width of the land at the connecting portion.

Moreover, in the first embodiment, it is preferred that a plurality of grooves elongated in a direction generally perpendicular to a tangent to the main cutting edge are provided on an upper surface of the insert in a vicinity of the main cutting edge; and portions between the grooves are used as rake faces.

Moreover, in the first embodiment, it is preferred that

$$0.20 \text{ mm} \leq RW \leq 0.50 \text{ mm}, \ 1.20 \leq RW/UW \leq 2.50,$$

$$UH \leq 0.60 \text{ mm}, \ 0.25 \text{ mm} \leq UL \leq 0.80 \text{ mm},$$

are satisfied, where, at the connecting portion, RW denotes a width of the rake face between the grooves, UW denotes a transverse width of the groove, UH denotes a longitudinal length of the groove, and UL denotes a length from the ridge line portion of the main cutting edge to an end of the groove.

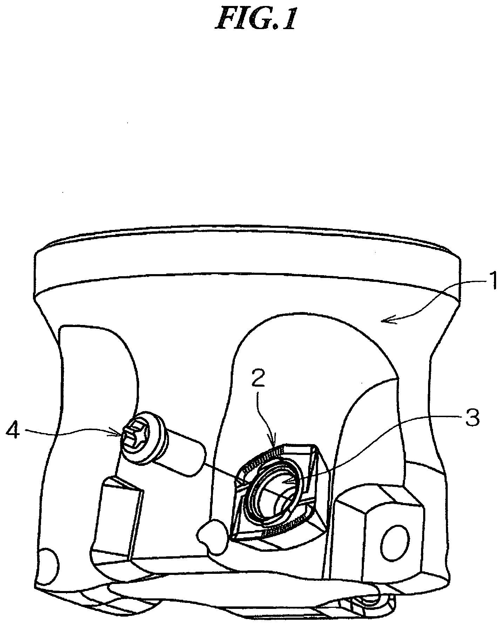

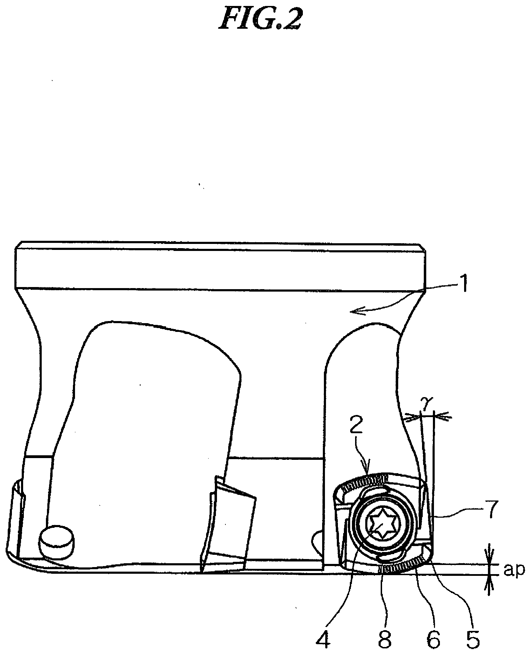

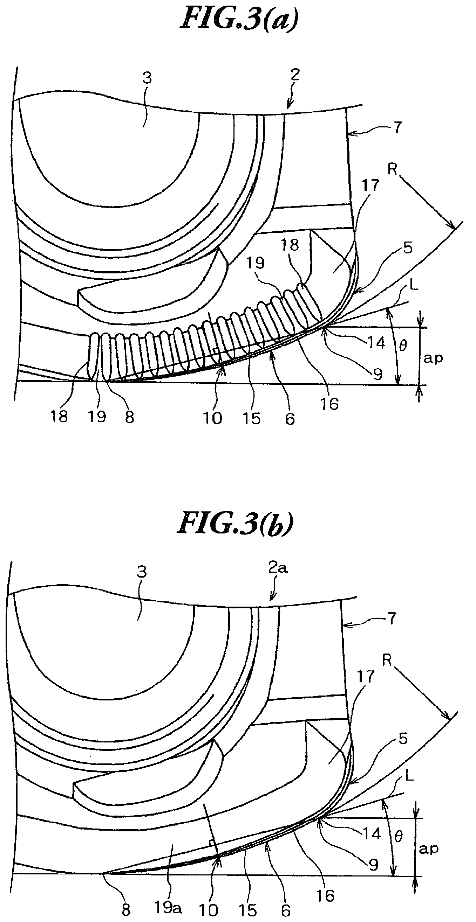

Fig. 1 is a diagram showing the first embodiment of an indexable milling cutter according to the invention of the present application. Fig. 1 is also a diagram illustrating how an insert 2 used for cutting is attached to a cutter body 1 of the indexable milling cutter. Fig. 2 is a diagram showing an example after the insert 2 has been attached to the cutter body 1 in Fig. 1. Figs. 3 to 8 are diagrams for illustrating a configuration of the insert 2 to be attached to the cutter body 1.

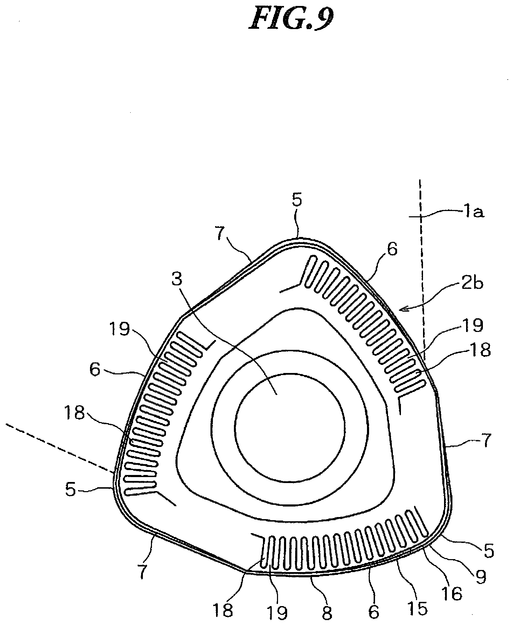

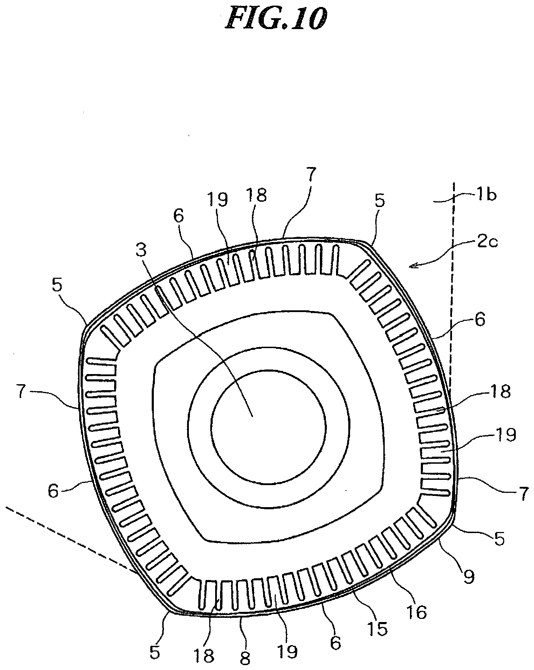

Fig. 9 is a diagram showing the configuration of another embodiment of the insert to be attached to the indexable milling cutter according to the first embodiment. Fig. 10 is a diagram showing the configuration of still another embodiment of the insert to be attached to the indexable milling cutter according to the first embodiment of the invention.

As shown in Figs. 1 and 2, the insert 2 is attached to the cutter body 1 through an attachment hole 3 provided at the center portion thereof by means of a clamp screw 4. As shown in Fig. 2, the insert 2, which is attached to the cutter body 1 as a cutting edge used in the indexable milling cutter according to a first embodiment of the invention of the present application, is what is called a two-corner type insert wherein a main cutting edge 6 and a peripheral cutting edge 7 are formed so as to interpose a corner cutting edge 5 therebetween, and another corner cutting edge 5, another main cutting edge 6, and another peripheral cutting edge 7 are formed at positions symmetrical about the attachment hole 3, thereby forming a generally quadrilateral shape as seen in a plan view.

When the insert 2 is attached to the cutter body 1, the main cutting edge 6 has a lowermost point 8 which defines the lowermost position of the cutter body 1. The peripheral cutting edge 7 formed on the insert 2 is attached and fixed so as to position on an outer side with respect to the tool rotation axis. Note that the lowermost point 8 is a position along the main cutting edge 6 created when the insert 2 is attached to the cutter body 1.

The surface of the insert 2 which is symmetrical with the peripheral cutting edge 7 about the attachment hole 3 is a constrained surface when the insert 2 is attached to the cutter body 1. Moreover, the insert 2 is attached while being slanted by a predetermined angle $\gamma$ with respect to the tool rotation axis direction, i.e., being back-tapered with the angle $\gamma$.

In the indexable milling cutter shown in Fig. 2 illustrating a first embodiment of the invention of the present application, since a value ap, which is a cutting depth during cutting, is set within the range of the main cutting edge 6, even when a vertical wall is processed, the peripheral cutting edge 7 does not contribute to the cutting. Since the peripheral cutting edge 7 does not function as the cutting edge, there is no cutting resistance generated.

Fig. 3(a) is a diagram showing the insert 2 shown in Fig. 1 (Fig. 2) on an enlarged scale. As shown in Fig. 3(a), the main cutting edge 6 of the insert 2 attached to the cutter body 1 has the lowermost point 8 describe above, and a connecting portion 9 between the main cutting edge 6 and the corner cutting edge 5. Where an angle (degrees) between a line segment L connecting the lowermost point 8 with the connecting portion 9 and a straight line perpendicular to the tool rotation axis is $\theta$, it is preferred that $5 \leq \theta \leq 30$.

Moreover, the main cutting edge 6 has a protruding shape with respect to the line segment L connecting the lowermost point 8 with the connecting portion 9 in a direction perpendicular to the tool rotation axis. In other words, the main cutting edge 6 has a protruding shape gently protruding in the outward direction as seen in a plan view when the insert 2 is viewed from above.

The protruding shape of the main cutting edge 6 may be formed by a curved line, a circular arc, or a combination of these, or a combination of straight lines. The size of the insert 2 used in the present invention is as follows. The diameter of the inscribed circle (a circle internally touching the sides forming a generally quadrilateral shape as seen in a plan view) is preferably in the range of 6 mm to 16 mm, and the radius R of the circular arc connecting three points, i.e., the lowermost point 8, an intersection point 10, and the connecting portion 9 is preferably in the range of 6 mm to 20 mm.

Here, the intersection point 10 refers to the intersection between the main cutting edge 6 and a perpendicular bisector of the line segment connecting the lowermost point 8 with the connecting portion 9, as shown in Fig. 3(a).

Since the main cutting edge 6 has a protruding shape as described above, the intersection point 10 is positioned on the outer side of the insert 2 with respect to the line segment L connecting the lowermost point 8 with the connecting portion 9 in a direction perpendicular to the tool rotation axis of the cutter body 1 as seen in a plan view as shown in Fig. 3(a).

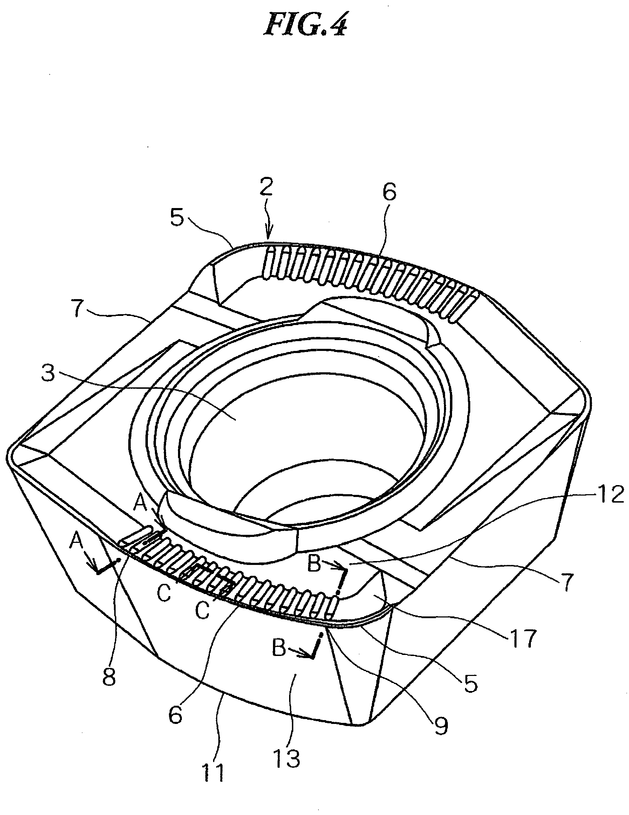

Fig. 4 is a perspective view of the insert 2 shown in Fig. 3(a). The insert 2 has a generally quadrilateral shape in a plan view as viewed from above, and includes a base 11 to be in contact with a seating surface of the cutter body 1, a rake face 12 opposing the base 11, and a flank face 13 formed between the base 11 and the rake face 12.

A cutting edge is formed at a ridge line portion formed by the rake face 12 and the flank face 13, and another cutting edge is similarly formed at a position symmetrical about the attachment hole 3 provided at the center portion of the insert 2.

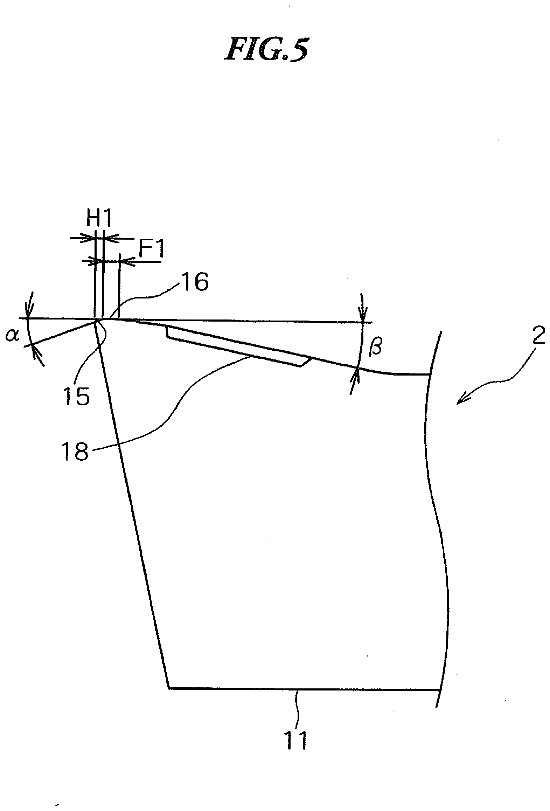

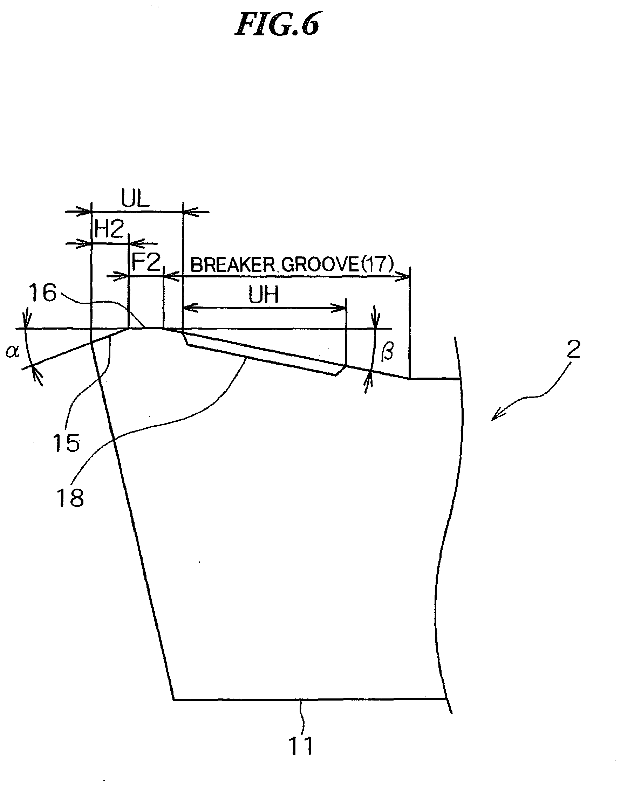

Fig. 5 is a cross-sectional view taken along line A-A near the lowermost point 8 in the main cutting edge 6 of the insert 2 shown in Fig. 4. As shown in Fig. 5, a negative honing 15 having a width H1 and a land 16 having a width F1 are formed on the insert 2. Fig. 6 is a cross-sectional view taken along line B-B shown in Fig. 4 near the connecting portion 9 between the main cutting edge 6 and the corner cutting edge 5.

Fig. 6 shows that the negative honing 15 having a width H2 and the land 16 having a width F2 are formed. Note that while the cross-sectional shape (the shape of the surface portion) of the land 16 shown in Figs. 5 and 6 exhibits a planar land (flat land), it may be a protruding shape having a circular arc cross-sectional shape, or the like, for example.

The widths H1 and H2 of the negative honing 15 shown in Figs. 5 and 6 represent lengths projected on the surface parallel to the base 11 of the insert 2. The widths F1 and F2 of the land 16 represent lengths projected on the surface parallel to the base 11 of the insert 2.

Moreover, $\alpha$ shown in Figs. 5 and 6 represents an angle $\alpha$ of the negative honing 15, and $\beta$ represents a rake angle $\beta$ of a breaker groove 17. Note that the angle $\alpha$ of the negative honing 15 represents an angle between the surface parallel to the base 11 of the insert 2 and an inclined surface of the negative honing 15.

The rake angle $\beta$ of the breaker groove 17 represents an angle between the surface parallel to the base 11 of the insert 2 and an inclined surface of the breaker groove 17. Note that the angle $\alpha$ of the negative honing and the rake angle $\beta$ of the breaker groove represent the angles described above also in the description of other embodiments of the indexable milling cutter of the present invention to be described below.

As shown in Figs. 3(a), 4, 5, and 6, the insert 2 to be attached to the indexable milling cutter includes the negative honing 15 and the land 16 on the side of the rake face 12 of the main cutting edge 6 so as to increase the cutting edge strength. Thus, chipping resistance in the main cutting edge 6 is improved, and chipping resistance on the outer periphery side near the corner cutting edge 5 is particularly improved.

As the width of the negative honing 15 becomes larger, increased chipping resistance is obtained. On the other hand, however, cutting resistance is increased, thereby increasing a load on a machine tool used for cutting, e.g., a machine tool such as a machining center. Thus, it is impossible to perform highly efficient high-feed processing.

In a case where a overhang (or a tool extension length) of the indexable milling cutter is long, more than 200 mm, or in a tool having a overhang four times or more the tool diameter, chattering vibration during cutting process is increased. Therefore, it is likely to cause the chipping of the cutting edge, and the processed surface roughness in a workpiece is also degraded. In contrast, when the width of the negative honing 15 is small, the cutting resistance is reduced.

However, the cutting edge strength is not sufficiently increased, and the cutting edge is therefore likely to be chipped. Thus, the width of the negative honing 15 is set as follows. The width of the negative honing 15 is set to be small when the rigidity of a workpiece is small, and when the overhang is long, 200 mm or more, or for a tool having a overhang four times or more the tool diameter in which chattering vibration, or the like, is likely to occur during cutting.

When the chipping of the cutting edge is likely to occur due to heavy interrupted cutting, the width of the negative honing 15 is conversely set to be large. The angle $\alpha$ (degrees) of the negative honing 15 is preferably set to be $5 \leq \alpha \leq 30$. The value $\alpha$ may be varied between the lowermost point 8 and the connecting portion 9.

Note that when the indexable milling cutter is attached to a machine tool such as a machining center, the above-described overhang represents a length from a surface at which the indexable milling cutter is attached to the machining center to the lowermost end of the indexable milling cutter. The high-feed processing described above is said to be high-efficient processing in which the feed per tooth is approximately 0.6 to 3.5 mm in a case where cutting process is performed on the S50C material (machine structural carbon steel).

As with the negative honing 15, if the width of the land 16 is large, the chipping resistance is improved. On the other hand, however, the cutting resistance is increased, thereby increasing a load on a machine tool used for cutting. Thus, it becomes impossible to perform highly efficient high-feed processing. In contrast, if the width of the land 16 is small, the cutting resistance is reduced, but the cutting edge strength is not sufficiently increased. Thus, the chipping of the cutting edge is likely to occur.

Therefore, the width of the land 16 is set as follows. In a case where the rigidity of a workpiece is small and chattering vibration, or the like, is likely to occur during cutting, or for an indexable milling cutter having a overhang four times or more the tool diameter, the width of the land 16 is preferably set to be small.

In contrast, when the chipping of the cutting edge is likely to occur due to heavy interrupted cutting, the width of the land 16 is preferably set to be large. Moreover, by providing the breaker groove 17 on the rake face, it is possible to reduce the cutting resistance. The rake angle $\beta$ (degrees) of the breaker groove 17 is preferably set to be $\beta \leq 20$, and more preferably, $10 \leq \beta \leq 20$.

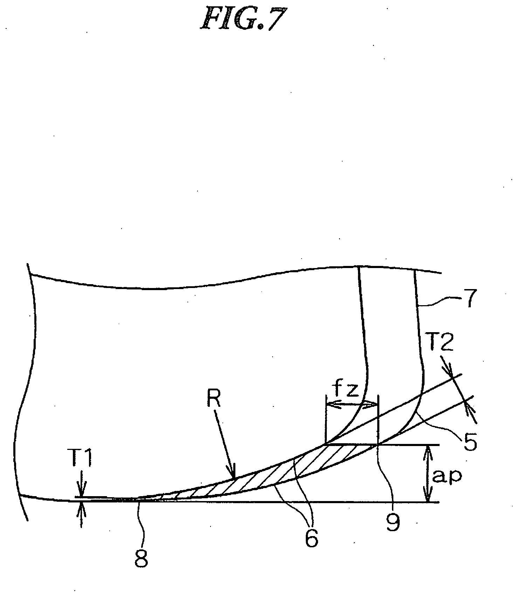

Fig. 7 is a schematic diagram for illustrating the thickness of a chip depending on portions of the main cutting edge 6 during cutting process in the indexable milling cutter of the present embodiment. As described above, the insert 2 attached to the cutter body 1 has the circular arc-shaped main cutting edge 6 which protrudes on the lower side in the tool rotation axis direction. The thickness of a chip obtained when a workpiece is subjected to cutting process using the circular arc-shaped main cutting edge 6 is not constant over the entire main cutting edge 6 in the length direction thereof.

For example, when the radius R of the main cutting edge 6 is 15 mm, a chip thickness T2 near the connecting portion 9 is approximately 0.6 mm and a chip thickness T1 near the lowermost point 8 is approximately 0.06 mm if processing is performed under such high-feed processing cutting conditions that the value ap, which is a cutting depth, is 1.5 mm, and the value fz, which is a feed per tooth, is 1.5 mm. That is, the value T1 becomes approximately 1/10 of the value T2.

Thus, in the indexable milling cutter according to the first embodiment of the present application, it is possible to realize an indexable milling cutter capable of reducing the cutting resistance and simultaneously improving the chipping resistance by respectively setting appropriate widths of the negative honing 15 depending on the portions of the cutting edge, i.e., the portion near the corner cutting edge 5 where the chip thickness becomes relatively thicker, and the portion near the lowermost point 8 where the chip thickness becomes relatively the thinnest.

As described above, in order to reduce cutting resistance, it is important to set the value H1, which is the width of the negative honing 15 at or near the lowermost point 8 at which the chip thickness is the thinnest, to be small. Here, even if the value H1 is set to be small, the cutting thickness is still thin. Thus, the chipping resistance of the cutting edge is not significantly degraded.

On the other hand, in the portion on the outer periphery side near the corner cutting edge 5 where the cutting thickness reaches its maximum (at or near the connecting portion 9), it is necessary to improve the chipping resistance by increasing the value H2 which is the width of the negative honing 15. Thus, in the first embodiment of the invention, the chipping resistance on the outer periphery side of the main cutting edge 6 of the insert 2 near the corner cutting edge 5 is improved placing a priority thereon.

Effects similar to those of the above-described values H1 and H2 representing the widths of the negative honing 15 can be obtained also by the values F1 and F2 which are the widths of the land 16. Thus, it is preferable to set an appropriate width of the land 16 depending on a portion of the cutting edge. In the indexable milling cutter of the present embodiment, the width of the negative honing 15 is gradually increased from the lowermost point 8 of the cutter body 1 toward the connecting portion 9, thereby making it possible to achieve the chipping resistance of the main cutting edge 6 and a reduction in resistance (reduction in cutting resistance).

Moreover, it is preferable to gradually increase the width of the land 16 from the lowermost point 8 of the cutter body 1 toward the connecting portion 9. Furthermore, it is preferable to gradually increase the width of the negative honing 15 and the width of the land 16 from the lowermost point 8 of the cutter body 1 toward the connecting portion 9 while the value H1 and the value F1 at the lowermost point 8 of the main cutting edge 6 are minimum values, and the value H2 and the value F2 at the connecting portion 9 between the main cutting edge 6 and the corner cutting edge 5 are maximum values.

Note that the above-described phrase, "to gradually increase," represents either a case of continuously increasing from the lowermost point 8 to the connecting portion 9 or a case where the width is not continuously increased, i.e., the width is not partially increased so as to include a portion of a constant width.

In contrast, in a conventional indexable milling cutter for high-feed processing, a negative honing of an insert has a constant width of approximately 0.20 mm, and a land also has a constant width. Therefore, in a case where the conventional insert is attached to the rotary tool, cutting is performed within the negative honing near the lowermost point of the rotary tool. Thus, the cutting quality is deteriorated, and large cutting resistance is therefore generated.

The reason for this is as follows. As described above, if the chip thickness T1 near the lowermost point 8 is approximately 0.06 mm whereas the width of the negative honing 15 is approximately 0.20 mm as in the conventional technique, the relationship of (chip thickness < negative honing width) holds. In such a state, since the chip thickness is smaller than the negative honing width, chips are curled to clog within the width of the negative honing.

Thus, the removal ability of chips is lowered, thereby deteriorating the cutting quality with respect to a workpiece and thus creating large cutting resistance. In contrast, if the relationship of (chip thickness > negative honing width) holds, a sharp cutting quality is obtained, and the cutting resistance is therefore reduced.

In the insert 2 to be attached to the indexable milling cutter of the present embodiment, first, the value H1 (mm), which is the width of the negative honing 15 at or near the lowermost point 8 of the main cutting edge 6, is preferably $0.03 \leq H1 \leq 0.10$. The reason for this is as follows. When the chip thickness near the lowermost point 8 of the cutter body 1 is estimated (calculated) based on cutting conditions during cutting process such as the value fz (a feed per tooth) and the cutting depth ap and the value H1 is set based on the calculated value, if the value H1 is less than 0.03 mm, chipping resistance is significantly lowered.

Rather than the influence of the chip thickness, this is resulted from a lack in the cutting edge strength which leads to the occurrence of chipping in the cutting edge due to an impact generated when the lowermost point 8 of the insert 2 comes into contact with a workpiece during cutting process. In contrast, if the value H1 is set to be a value greater than 0.10 mm, the cutting resistance is increased, thereby leading to a problem that the high-feed processing, or the like, cannot be performed.

In the following description, the lowermost point 8 or the vicinity of the lowermost point 8 described above is sometimes stated as the "lowermost point 8." Therefore, if the "lowermost point 8" is stated, it represents the lowermost point 8 or the vicinity thereof.

Next, the width H2 of the negative honing 15 at or near the connecting portion 9 (hereinafter, there is a case where the connecting portion 9 or the vicinity of the connecting portion 9 is stated as the "connecting portion 9." Therefore, when the "connecting portion 9" is stated, it represents the connecting portion 9 or the vicinity thereof) is preferably set after setting the above-described value H1 so that the ratio between the value H1 and the value H2, i.e., the value of H1/H2 is 0.15 to 0.50.

Then, there is obtained the best balance between the chipping resistance of the main cutting edge 6 and the cutting resistance, and it is possible to reduce the cutting resistance by 10 % or more as compared to the conventional insert without deteriorating the chipping resistance. The reason for this is as follows.

Since the range of an area in which (chip thickness < negative honing width) holds is reduced at or near the lowermost point 8 of the main cutting edge 6 whereas the chip thickness becomes thicker along the outer periphery side of the main cutting edge 6, it transitions to the range of an area in which (chip thickness > negative honing width) holds as being approached to the outer periphery side of the main cutting edge 6.

Therefore, even when the value H1 is set to be a width approximately 30 % larger than the chip thickness T1 near the lowermost point 8 of the cutter body 1, the range in which cutting is performed within the width of the negative honing is small. Thus, it is possible to reduce the cutting resistance by 10 % or more. Note however that the value H2 is preferably set within the range of 0.10 to 0.50 mm in view of the chipping resistance of the cutting edge and an increase in the cutting resistance.

Moreover, in the insert 2, the value F1 (mm), which is the width of the land 16 at the lowermost point 8 of the main cutting edge 6, is preferably set to be $0.03 \leq F1 \leq 0.10$. This is because the value F1 of less than 0.03 mm cannot effectively increase cutting edge strength and chipping resistance is thereby reduced.

If cutting edge strength is lacking, the chipping of the cutting edge is caused by an impact generated when the lowermost point 8 of the insert 2 comes into contact with a workpiece during cutting. In contrast, if the value F1 is greater than 0.10 mm, there is created a problem of an increase in the cutting resistance.

In the insert 2, the value F2 (mm), which is the width of the land 16 at the connecting portion 9, is preferably set after setting the value F1 so that the value of F1/F2 is 0.15 to 0.50. Thus, there is obtained an advantageous effect of delaying the progress of wear on the rake face 12 of the main cutting edge 6. As the value F2 becomes larger, there is obtained a greater effect of delaying wear on the rake face 12, especially on the outer periphery side thereof near the corner cutting edge 5, thereby improving the chipping resistance.

Note however that the value F2 is preferably set within the range of 0.10 to 0.50 mm in view of the chipping resistance of the cutting edge and an increase in the cutting resistance. When the value F2 is excessively large, the removal ability of chips is lowered, thereby increasing the cutting resistance. This is because there is created a problem of hindering the flow which guides chips to the breaker groove 17.

In the indexable milling cutter according to the present embodiment, chips generated during high-feed processing are discharged in a direction generally perpendicular to the main cutting edge 6. Thus, as shown in Fig. 3(a), it is preferable to provide, at least from the outer periphery side of the rake face 12 of the insert 2 near the corner cutting edge 5 to the lowermost point 8 or the vicinity thereof, a plurality of grooves 18 each formed in an elongated shape in a direction generally perpendicular to the tangent to the main cutting edge 6 having a generally circular arc shape.

The cross-sectional shape of the groove 18 may be any shape as long as it is a depressed shape such as a U-letter shape, or a V-letter shape. In the following description, the groove 18 is stated as the "U-shaped groove 18." A rake face 19 is provided between the U-shaped grooves 18.

By placing the plurality of U-shaped grooves 18 and the plurality of rake faces 19 in such a manner, when chips (not shown) proceed along the rake face 19, a contact area between the rake face 19 and the chips is reduced, thereby reducing the frictional force thereof and also suppressing an increase in the temperature of the rake face 19 due to the friction. Thus, it is possible to exert a preferable effect such that the cutting resistance is lowered and the progress of wear can be delayed.

Particularly on the outer periphery side of the main cutting edge 6 near the corner cutting edge 5, the width H2 of the negative honing 15 and the width F2 of the land 16 are both set to be large, and there is therefore a tendency that the cutting resistance is increased. Thus, it is preferable to provide the plurality of U-shaped grooves 18 in the portion of the rake face 19.

The cross-sectional shape of the portion of the rake face 19 provided between adjacent U-shaped grooves 18 and 18 is a planar or gently protruding shape, and the rake face 19 having a planar or gently protruding shape is a surface which comes into contact with chips. As approaching to the vicinity of the connecting portion 9 which is the outer periphery side of the cutter body 1, a load imposed on the main cutting edge 6 during cutting process becomes larger. Therefore, in the indexable milling cutter according to the present embodiment, cutting edge strength is improved by setting the value H2 to be greater than the value H1 as described above.

Although a measure to reduce cutting resistance was not taken in the improvement of cutting edge strength, it is possible to take a measure to reduce cutting resistance by the arrangement of the U-shaped grooves 18 described above. Note that Figs. 3(a) and 4 show an example in which the plurality of U-shaped grooves 18 and the plurality of rake faces 19 are formed in an alternate manner from the vicinity of the connecting portion 9 to the vicinity of the lowermost point 8.

By providing the plurality of U-shaped grooves 18 on the rake face on the outer periphery side of the insert 2 in this manner, it becomes possible to achieve a reduction in cutting resistance as described above. The reduction in cutting resistance is achieved because a contact area between chips and the rake face 19 can be reduced.

Particularly, in a case where high-feed processing is performed using a long indexable milling cutter having a overhang of more than 200 mm with the above-described insert 2 being attached to the cutter body 1, it is possible to achieve a preferable reduction in cutting resistance.

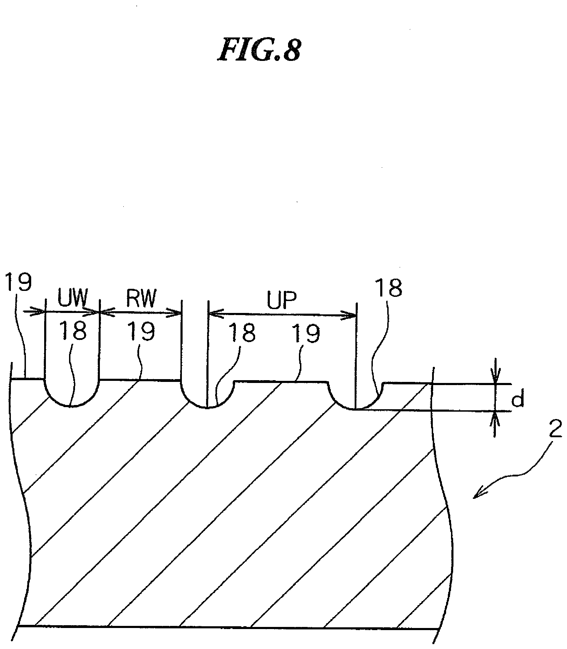

Fig. 8 shows a cross-sectional view taken along line C-C on the rake face of the insert 2 shown in Fig. 4. As shown in Fig. 8, the groove depth of the plurality of U-shaped grooves 18 is denoted as d, the transverse width of the U-shaped groove 18 is denoted as UW, the pitch between the U-shaped grooves 18 positioned next to each other is denoted as UP, and the transverse width of the rake face 19 is denoted as RW.

In the first embodiment of the present application, RW and the relationship between RW and UW described above are preferably $0.20 \leq RW \leq 0.50$, and $1.20 \leq RW/UW \leq 2.50$ at or near the connecting portion 9. Thus, by specifying the value RW and the ratio between the value RW and the value UW on the rake face 19 of the insert 2 at or near the connecting portion 9 so as to be within the above-described ranges, it is possible to achieve a reduction in cutting resistance in such an extent that the progress of wear on the rake face 19 of the insert 2 is not adversely affected.

If the value RW is less than 0.20 or the value of RW/UW is less than 1.20, an area contacting with chips is reduced, and cutting resistance is thus reduced. On the other hand, however, the progress of wear on the rake face 19 becomes prominent, thereby deteriorating the chipping resistance of the cutting edge.

In contrast, if the value RW is greater than 0.50, or the value of RW/UW is greater than 2.5, the progress of wear on the rake face 19 is suppressed. Therefore, it is possible to maintain the chipping resistance of the cutting edge. However, since a reduction in the area contacting with chips is insufficient, it is impossible to reduce cutting resistance.

The value UH (mm), which is the longitudinal length of the U-shaped groove 18 at or near the connecting portion 9 shown in Fig. 6, is preferably $UH \geq 0.60$ mm. This is because if the value UH is less than 0.60 mm, the length of the U-shaped groove 18 is too short to sufficiently reduce the area contacting with chips, failing to effectively contribute to a reduction in cutting resistance.

Here, the upper limit of the value UH is determined by the configuration of the rake face 19 such as the angle of gradient β described above. The upper limit of the value UH is preferably 6 mm or less. The reason for this is as follows. If the angle β is large, chips are curled, resulting in no contact with the rake face and thus no contribution to a reduction in cutting resistance. In contrast, if the angle β is small, an area in which the rake face is rubbed with chips becomes longer.

Thus, the larger the value UH, the more effective for a reduction in cutting resistance. Since the angle β is set to be small so as to be $\beta \leq 20°$ as described above in the present invention, about 6 mm is sufficient for the upper limit of the value UH.

Note that the value UH of the U-shaped groove 18 described above represents the length of the U-shaped groove 18 in the longitudinal direction (the length projected on the surface parallel to the base 11).

Moreover, as shown in Fig. 6, when a length from the ridge line portion of the main cutting edge 6 to an end of the U-shaped groove 18 on the ridge line portion side of the main cutting edge is denoted as UL (representing the length projected on the surface parallel to the base 11), the value UL (mm) at or near the connecting portion 9 is preferably $0.25 \leq UL \leq 0.80$.

This is because if the value UL is set within this range, it is possible to reduce cutting resistance within an extent that the U-shaped groove 18 does not adversely affect the progress of wear on the rake face 19 while taking into consideration an area in which chips contact with the rake face 19.

If the value UL is less than 0.25 mm, the position at which the U-shaped groove 18 is provided is too close to the cutting edge. Therefore, the progress of wear on the rake face 19 is accelerated, thereby deteriorating the chipping resistance. In contrast, if the value UL is greater than 0.80 mm, a reduction in cutting resistance is not effectively obtained.

As shown in Fig. 8, where the pitch (mm) of the U-shaped grooves 18 is denoted as UP, a preferable balance between a reduction in resistance during cutting and chipping resistance is achieved by varying the value UP so as to gradually increase from the lowermost point 8 of the cutter body 1 toward the connecting portion 9.

Moreover, by forming the U-shaped grooves so that the value UP is gradually increased from the lowermost point 8 of the cutter body 1 toward the connecting portion 9, the number of U-shaped grooves on the outer periphery side of the tool (insert) is reduced as compared to the number of those at the lowermost point 8, thereby effectively delaying the progress of wear on the rake faces 19 on the outer periphery side of the tool.

Therefore, a reduction in cutting resistance and the chipping resistance of the cutting edge are well-balanced. In contrast, if the value UP at the connecting portion 9 is set to be relatively small (the value UP is set so as not to gradually increase from the lowermost point 8 of the rotary tool toward the connecting portion 9), the density of the existence of the U-shaped grooves 18 becomes large and the area of the rake faces 19 is thereby reduced.

In such a case, the area which contacts with chips is further reduced, thereby achieving a reduction in cutting resistance. However, wear on the rake face 19 is also accelerated, thereby deteriorating the chipping resistance of the cutting edge. In contrast, if the value UP in the rake face 19 at the lowermost point 8 of the cutter body 1 is set to be small, the density of the existence of the U-shaped grooves 18 is increased, and a reduction in cutting resistance is more effectively achieved.

At the lowermost point 8 of the cutter body 1, the thickness of a chip is thin, and the progress of wear on the rake face 19 is therefore slow. Thus, by setting the value UP to be small, a greater effect is obtained at the lowermost point 8 of the cutter body 1.

Note that the above-described phrase, "to gradually increase," represents either a case of continuously increasing the value UP from the lowermost point 8 of the cutter body 1 toward the connecting portion 9 or a case where the value is not continuously increased, i.e., the value is not partially increased so as to include a portion with a constant value.

The "d" shown in Fig. 8 represents the depth of the U-shaped groove 18 (the depth from the rake face 19). If the value d, which is the depth of the U-shaped groove 18, is greater than 1 mm, the strength of the insert 2 becomes insufficient. A large load is placed on the cutting edge during high-feed processing, particularly, and it is likely to break the cutting edge.

Thus, the value d is preferably set to be 1 mm or less. Moreover, in order to maintain the cutting edge strength, it is preferred that the value d is gradually decreased from the lowermost point 8 toward the connecting portion 9.

Note that the insert 2 to be attached to the indexable milling cutter according to the first embodiment of the present application does not always need to include the above-described U-shaped grooves 18. Fig. 3(b) shows an embodiment of an insert 2a in which the U-shaped grooves 18 are not provided on a rake face 19a. Also in an indexable milling cutter to which the insert 2a with no U-shaped groove 18 is attached, it is possible to achieve a reduction in cutting resistance while maintaining the chipping resistance of the main cutting edge.

Next, other embodiments of an insert to be attached to the indexable milling cutter according to the first embodiment of the invention of the present application which is capable of achieving a reduction in cutting resistance while maintaining the chipping resistance of the main cutting edge will be described with reference to Figs. 9 and 10.

Fig. 9 shows an embodiment of an insert in the form of a plate having a generally triangular shape as seen in a plan view. Fig. 9 shows what is called a three-corner type insert 2b in which main cutting edges 6, corner cutting edges 5, and peripheral cutting edges 7 are provided at three positions. As with the two-corner type insert 2 described above, the insert 2b shown in Fig. 9 includes negative honings 15, lands 16, breaker grooves 17 (not shown), a plurality of U-shaped grooves 18 and a plurality of rake faces 19, etc.

When the insert 2b is attached to a cutter body 1a, a lowermost point 8 of the indexable milling cutter exists on the position of the main cutting edge 6 as in the above-described insert 2. Note that the three-corner type insert 2b has an advantage such that when the cutting edge at one corner portion is worn out and the cutting quality thereof is thus deteriorated, the insert 2b is reattached to the cutter body 1a so that the cutting edges at the other two corners can be used for cutting process sequentially in rotation.

While the embodiment of the insert 2b shown in Fig. 9 shows an example in which the plurality of U-shaped grooves 18 are provided, it may be an insert 2b in which the U-shaped grooves 18 are not provided as in the insert 2a shown in Fig. 3(b).

Fig. 10 shows an embodiment of an insert in the form of a plate having a generally quadrilateral shape as seen in a plan view. Fig. 10 shows what is called a four-corner type insert 2c in which main cutting edges 6, corner cutting edges 5, and peripheral cutting edges 7 are provided at four positions. As with the above-described insert 2, the insert 2c shown in Fig. 10 includes negative honings 15, lands 16, breaker grooves 17, a plurality of U-shaped grooves 18, rake faces 19, etc.

When the insert 2c is attached to a cutter body 1b, a lowermost point 8 of the indexable milling cutter exists on the position of the main cutting edge 6 as in the above-described insert 2. Note that the four-corner type insert 2c has an advantage such that if the cutting edge at one corner portion is worn out and the cutting quality thereof is thus deteriorated, the insert 2c is reattached to the cutter body 1b so that the cutting edges at the other three corners can be used for cutting process sequentially in rotation.

While the embodiment of the insert 2c shown in Fig. 10 shows an example in which the plurality of U-shaped grooves 18 are provided, it may be an insert 2c in which the U-shaped grooves 18 are not provided as in the insert 2a shown in Fig. 3(b).

Cutting Test Example 1

Next, the results of a cutting test (hereinafter, referred to as "Cutting Test Example 1") for checking a reduction in the cutting resistance and the effect of the chipping resistance of the indexable milling cutter of the first embodiment of the present application will be described.

In order to carry out Cutting Test Example 1 for the indexable milling cutter representing a first embodiment according to the invention of the present application, there were produced inserts (the inserts shown in Fig. 3) to be attached to the tool for checking a reduction in the cutting resistance and the effect of the chipping resistance. As shown in Table 1, 29 kinds of inserts having sample numbers 1a to 29a were produced.

As shown in Table 1, among the 29 kinds of inserts produced, the sample numbers 1a to 23a represent samples produced as inserts for the indexable milling cutter according to the above-described first embodiment of the present application. The sample numbers 24a to 28a represent inserts produced as comparative examples, and the sample number 29a represents an insert produced as a conventional example. These are shown in the remarks section of Table 1.

Note that the sample numbers 1a to 23a each have the configuration of the insert according to the above-described first embodiment of the present application, i.e., the configuration of a negative honing and a land, etc. Note however that inserts with no U-shaped grooves 18 were produced as the sample numbers 1a to 6a.

Inserts which do not have the configuration of the negative honing, the land, and the like according to the above-described first embodiment of the present application and which do not have U-shaped grooves were produced as the sample numbers 24a to 28a, which are comparative examples.

An insert with a negative honing but without a land, and with no U-shaped grooves was produced as the sample number 29, which is a conventional example. Note that the sample numbers 1a to 23a are sometimes stated as the examples of the present invention in the following description.

Among the 29 kinds of inserts, as the insert of the sample number 1a, there was produced an insert made of WC-based cemented carbide by using a powder metallurgy technique. The size of the insert of the sample number 1a was such that the diameter of the inscribed circle was 14 mm, the thickness was 5.56 mm, and the radius R of the main cutting edge was 15 mm.

The insert of the sample number 1a was produced by a press machine using a die, and the provision of the negative honing was made by die molding. Note that the land was a flat land having a flat surface shape. Moreover, the inserts of the sample numbers 2a to 23a, the inserts of the sample numbers 24a to 28a which are comparative examples, and the insert of the sample number 29a which is a conventional example were produced by the same method as that of the sample number 1a except that the width of a negative honing, the width of a land, and the shape of a U-shaped groove provided on a rake face were varied by changing the settings of the shape of the molding die.

The size of these inserts was the same as that of the sample number 1a. Note that the above-described protruding shape of the main cutting edge 6 was a shape formed by a combination of a straight line and a curved line in the sample numbers 4a to 6a, whereas the protruding shape in the other sample numbers was a circular arc shape.

The provision of the U-shaped grooves on the produced insert was performed during the settings of the shape of a press die. The values H2 in the sample numbers 1a to 23a and the comparative examples 25a to 28a were all set to be the same value of 0.20 mm. Moreover, the values F2 in the sample numbers 4a to 23a and the sample numbers 25a to 28a which are the comparative examples were all set to be the same value of 0.20 mm.

In any of the produced inserts, the angle $\alpha$ (degrees) of the negative honing was 20°, the rake angle $\beta$ (degrees) of the breaker groove was 12°, and in a case where the U-shaped groove was provided, the depth thereof, i.e., the value d was 1 mm or less. The sample number 29a which is the insert of the conventional example was produced so that the negative honing had a constant width of 0.20 mm along the entire main cutting edge.

In the cutting test, the cutting resistance value was measured in cutting process using a machine tool with a single-edge indexable milling cutter including each of the inserts of different sample numbers attached to a cutter body having a tool diameter of 63 mm. Note that in the evaluation of cutting resistance, cutting process was performed for 10 minutes using, as a workpiece, the S50C material (machine structural carbon steel) having a flat processed surface, and it was determined to be "effective" for a reduction in cutting resistance if a 10 % or more reduction in the cutting resistance value was obtained as compared to the sample number 29a which is the conventional example.

The cutting resistance value measured in the cutting test was a value obtained by averaging obtained data at a portion in which measured values were relatively stable and calculating the resultant force of three force components (a principal force component, a thrust force component, and a feed force component). As a measurement device for measuring cutting resistance values, a measurement device manufactured by Kistler Japan Co., Ltd. was used.

Note that also in other Cutting Test Examples 2 and 3 to be described later, the measured cutting resistance value was a value obtained by averaging obtained data at the above-described portion in which measured values were relatively stable and calculating the resultant force of the three force components, and the measurement device used for the measurement was the same as the above-described measurement device.

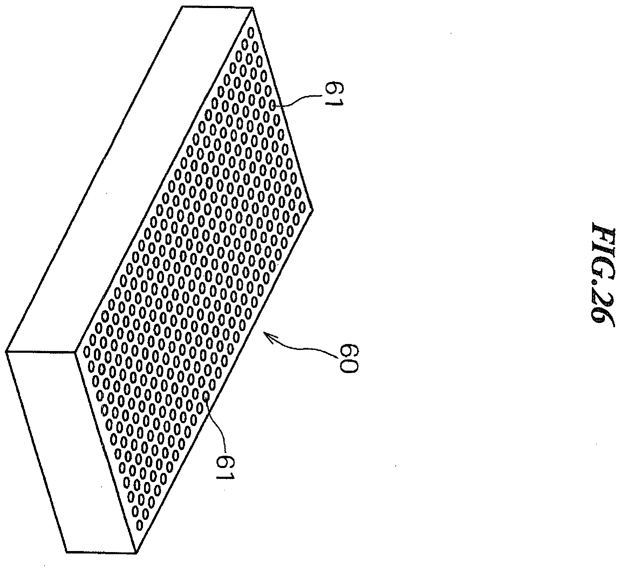

Next, the evaluation of chipping resistance was carried out after performing, for 60 minutes, high-feed planar cutting process by heavy interrupted cutting using, as a workpiece, a workpiece 60 made of the S50C material including a plurality of holes 61 each having a diameter of 6 mm as shown in Fig 26. In the tests for evaluating chipping resistance, five inserts were prepared for each of the sample numbers 1a to 29a, and cutting was performed for 60 minutes using a single edge of one insert attached to a cutter body for each of the tests for evaluating chipping resistance.

The tests for evaluating chipping resistance were carried out sequentially for all of these five inserts. The evaluation of chipping resistance was made based on the presence/absence of the occurrence of chipping in the cutting edge in the high-feed planar cutting process by heavy interrupted cutting lasted for 60 minutes.

Table 1 shows the results of Cutting Test Example 1 described above which was performed for checking a reduction in cutting resistance and the effect of chipping resistance. If all of the five inserts in each of the sample numbers 1a to 29a could perform processing without chipping in the above-described cutting of the high-feed planar cutting process by heavy interrupted cutting lasted for 60 minutes, the "○" mark was shown in the section of chipping resistance in the evaluation results in Table 1.

If at least one of the five inserts was chipped, the "×" mark was shown therein. Table 1 also shows the value H1, the value of H1/H2, the value F1, the value of F1/F2, and the conditions of a U-shaped groove on a rake face described above for each of the inserts of the sample numbers 1a to 29a. Note that in the section of the U-shaped groove on rake face shown in Table 1, the values of RW, RW/UW, UH, and UL were values at or near the connecting portion 9 for the inserts of the sample numbers in which the U-shaped grooves 18 were provided.

Note that various conditions for cutting process were set as follows in Cutting Test Example 1 described above.

Cutting process conditions in Cutting Test Example 1

| | |
|---|---|
| Processing method: | planar cutting process, dry cutting process |
| Cutting velocity Vc: | 120 m/min |
| Number of revolutions n: | 606 min$^{-1}$ |
| Feed per tooth fz: | 1.5 mm/tooth |
| Axial cutting amount ap: | 1.5 mm |
| Radial cutting amount ae: | 40 mm |
| Overhang: | 250 mm |

Table 1

| Sample Number | Negative honing | | Land | | U-shaped groove on rake face | | | | | Evaluation results | | | | Remarks |
|---|---|---|---|---|---|---|---|---|---|---|---|---|---|---|
| | H1 (mm) | H1/H2 | F1 (mm) | F1/F2 | Presence/Absence of U-shaped groove | RW (mm) | RW/U W | UH (mm) | UL (mm) | Cutting resistance (N) | Rate of reduction in cutting resistance (%) | Chipping resistance | Overall judgment | |
| 1a | 0.03 | 0.15 | 0.03 | 1.00 | Absent | - | - | - | - | 3085 | 18.3 | ○ | ○ | |
| 2a | 0.06 | 0.30 | 0.06 | 1.00 | Absent | - | - | - | - | 3140 | 16.9 | ○ | ○ | |
| 3a | 0.10 | 0.50 | 0.10 | 1.00 | Absent | - | - | - | - | 3280 | 13.2 | ○ | ○ | |
| 4a | 0.03 | 0.15 | 0.03 | 0.15 | Absent | - | - | - | - | 3060 | 19.0 | ○ | ○ | |
| 5a | 0.06 | 0.30 | 0.06 | 0.30 | Absent | - | - | - | - | 3115 | 17.5 | ○ | ○ | |
| 6a | 0.10 | 0.50 | 0.10 | 0.50 | Absent | - | - | - | - | 3240 | 14.2 | ○ | ○ | |
| 7a | 0.03 | 0.15 | 0.03 | 0.15 | Present | 0.20 | 1.20 | 0.60 | 0.25 | 3055 | 19.1 | ○ | ○ | |
| 8a | 0.06 | 0.30 | 0.06 | 0.30 | Present | 0.20 | 1.20 | 0.60 | 0.25 | 3110 | 17.7 | ○ | ○ | |
| 9a | 0.10 | 0.50 | 0.10 | 0.50 | Present | 0.20 | 1.20 | 0.60 | 0.25 | 3235 | 14.4 | ○ | ○ | |
| 10a | 0.03 | 0.15 | 0.03 | 0.15 | Present | 0.15 | 1.20 | 0.60 | 0.25 | 3000 | 20.6 | ○ | ○ | |
| 11a | 0.03 | 0.15 | 0.03 | 0.15 | Present | 0.50 | 1.20 | 0.60 | 0.25 | 3075 | 18.6 | ○ | ○ | Examples of Present Invention |
| 12a | 0.03 | 0.15 | 0.03 | 0.15 | Present | 0.60 | 1.20 | 0.60 | 0.25 | 3100 | 17.9 | ○ | ○ | |
| 13a | 0.03 | 0.15 | 0.03 | 0.15 | Present | 0.30 | 0.80 | 0.60 | 0.25 | 3010 | 20.3 | ○ | ○ | |
| 14a | 0.03 | 0.15 | 0.03 | 0.15 | Present | 0.30 | 2.50 | 0.60 | 0.25 | 3085 | 18.3 | ○ | ○ | |
| 15a | 0.03 | 0.15 | 0.03 | 0.15 | Present | 0.30 | 3.00 | 0.60 | 0.25 | 3150 | 16.6 | ○ | ○ | |
| 16a | 0.03 | 0.15 | 0.03 | 0.15 | Present | 0.30 | 1.20 | 0.30 | 0.25 | 3085 | 18.3 | ○ | ○ | |
| 17a | 0.03 | 0.15 | 0.03 | 0.15 | Present | 0.30 | 1.20 | 1.00 | 0.25 | 3045 | 19.4 | ○ | ○ | |
| 18a | 0.03 | 0.15 | 0.03 | 0.15 | Present | 0.30 | 1.20 | 2.00 | 0.25 | 3040 | 19.5 | ○ | ○ | |
| 19a | 0.03 | 0.15 | 0.03 | 0.15 | Present | 0.30 | 1.20 | 0.60 | 0.20 | 3055 | 19.1 | ○ | ○ | |
| 20a | 0.03 | 0.15 | 0.03 | 0.15 | Present | 0.30 | 1.20 | 0.60 | 0.80 | 3055 | 19.1 | ○ | ○ | |
| 21a | 0.03 | 0.15 | 0.03 | 0.15 | Present | 0.30 | 1.20 | 0.60 | 1.00 | 3055 | 19.1 | ○ | ○ | |

EP 2 412 464 B2

(continued)

| Sample Number | Negative honing | | Land | | U-shaped groove on rake face | | | | | Evaluation results | | | | Remarks |
|---|---|---|---|---|---|---|---|---|---|---|---|---|---|---|
| | H1 (mm) | H1/H2 | F1 (mm) | F1/F2 | Presence/Absence of U-shaped groove | RW (mm) | RW/U W | UH (mm) | UL (mm) | Cutting resistanc e (N) | Rate of reduction in cutting resistance (%) | Chipping re-sistance | Overall judgment | |
| 22a | 0.03 | 0.15 | 0.06 | 0.30 | Present | 0.30 | 1.20 | 0.60 | 0.25 | 3080 | 18.5 | ○ | ○ | |
| 23a | 0.03 | 0.15 | 0.10 | 0.50 | Present | 0.30 | 1.20 | 0.60 | 0.25 | 3100 | 17.9 | ○ | ○ | |
| 24a | 0.00 | 0.00 | 000 | 0.00 | Absent | - | - | - | - | 2940 | 22.2 | × | × | Comparative Examples |
| 25a | 0.01 | 0.05 | 0.01 | 0.05 | Absent | - | - | - | - | 3150 | 16.6 | × | × | |
| 26a | 0.02 | 0.10 | 0.02 | 0.10 | Absent | - | - | - | - | 3200 | 15.3 | × | × | |
| 27a | 0.12 | 0.60 | 0.12 | 0.60 | Absent | - | - | - | - | 3600 | 4.7 | ○ | × | |
| 28a | 0.15 | 0.75 | 0.15 | 0.75 | Absent | - | - | - | - | 3700 | 2.0 | ○ | × | |
| 29a | 0.20 | 1.00 | 0.00 | 0.00 | Absent | - | - | - | - | 3777 | - | ○ | × | Conventional Example |

According to the cutting resistance measurement test in the evaluation results shown in Table 1, when high-feed processing with a fz value of 1.5 mm/tooth was performed using the insert of the sample number 29a representing an insert of a conventional example, the cutting resistance value at a point in time when the insert of a conventional example with a constant negative honing width of 0.2 mm has finished cutting for ten minutes was 3777 N.

Based on the cutting resistance value (3777 N) of the sample number 29a which is the insert of a conventional example, the sample numbers 1a to 28a were evaluated for the effectiveness of a reduction in cutting resistance by 10 % or more. As a result, as shown in the section of cutting resistance (N) and the section of rate of reduction in cutting resistance (%) in the evaluation results of Table 1, the sample numbers 1a to 26a achieved the targeted 10 % or more reduction in cutting resistance.

Moreover, the sample numbers 1a to 23a, which are the examples of the present invention, could perform processing without causing chattering vibration even under the condition of a long overhang (length) of 250 mm. Thus, it was concluded that the examples of the present invention can perform processing with a greater cutting feed since a load on a machine tool was decreased due to a reduction in cutting resistance by 10 % or more as compared to the conventional example.

Particularly, it is concluded that the value H1 is preferably set to be equal to or less than the chip thickness near the lowermost point 8 of the cutter body as described above.

In view of the comparison among the sample numbers 1a to 23a shown in Table 1, each of the sample numbers 1a to 6a was able to achieve a reduction in cutting resistance by 13.2 % or more as shown in Table 1 although the U-shaped grooves were not provided. Each of the sample numbers 7a to 23a was able to achieve a reduction in cutting resistance by 16.6 % or more since the plurality of U-shaped grooves 18 were provided on the rake face. In view of this, it was found that a greater effect for a reduction in cutting resistance is obtained by the provision of the U-shaped grooves 18 in the first embodiment of the present application.

The values RW and the rates of reduction in cutting resistance were compared to one another about the four kinds of sample numbers 7a, and 10a to 12a which are the examples of the present invention. In the sample number 10a, since the value RW was 0.15 mm as shown in Table 1, the rate of reduction in cutting resistance was 20.6 % which was the most favorable rate.

In the observation of the rake face, however, wear has progressed most among the four kinds. In the sample number 12a, since the value RW was 0.60 mm, the progress of wear on the rake face was small, but the rate of reduction in cutting resistance was only 17.9 %.

In the sample numbers 7a and 11a, since the values RW were 0.20 mm and 0.50 mm, respectively, the progress of wear on the rake faces was suppressed while obtaining the high rates of reduction in cutting resistance which were 19.1 % and 18.6 %, respectively. Thus, the balance between the rate of reduction in cutting resistance and the suppression of the progress of wear on the rake face was favorable.

The values of RW/UW and the rates of reduction in cutting resistance were compared to one another about the four kinds of sample numbers 7a, and 13a to 15a which are the examples of the present invention. In the sample number 13a, since the value of RW/UW was 0.80, the rate of reduction in cutting resistance was 20.3 %, but the progress of wear on the rake face was observed.

In the sample number 15a, since the value of RW/UW was 3.00, the progress of wear was small, but the rate of reduction in cutting resistance was only 16.6 %. In the sample numbers 7a and 14a, since the values of RW/UW were 1.20 and 2.50, respectively, the progress of wear on the rake faces was suppressed while obtaining the high rates of reduction in cutting resistance which were 19.1 and 18.3, respectively.

Thus, the balance between the rate of reduction in cutting resistance and the suppression of the progress of wear on the rake face was favorable.

The values UH, each of which is the longitudinal length of a U-shaped groove 18, and the rates of reduction in cutting resistance were compared to one another about the four kinds of sample numbers 7a, and 16a to 18a which are the examples of the present invention. In the sample number 16a, since the value UH was 0.30 mm, the rate of reduction in cutting resistance was only 18.3 %.

In the sample numbers 7a, 17a, and 18a, on the other hand, since the values UH were 0.60 mm or more, the rates of reduction in cutting resistance were 19.1 % or more. That is, the rates of reduction in cutting resistance were excellent.

The values UL, each of which is the length from the ridge line portion of the main cutting edge 6 to an end of the U-shaped groove 18 on the ridge line portion side of the main cutting edge shown in Fig. 6, and the rates of reduction in cutting resistance were compared to one another about the four kinds of sample numbers 7a, and 19a to 21a which are the examples of the present invention. Although the four kinds all indicated the same rate of reduction in cutting resistance, a greater level of wear progress on a rake face was observed in the order of a smaller UL value, i.e., in the order of the sample numbers 19a, 7a, 20a, and 21a.

Cutting resistances when the values H1 and the values of H1/H2 were set to the same condition and the values F1 and the values of F 1/F2 were varied were compared to one another about the three kinds of sample numbers 7a, 22a, and 23a which are the examples of the present invention. As a result, as the width of the land 16 increased, the cutting resistance increased. Particularly, the difference between the sample numbers 7a and 23a was 45 N.

Using the sample numbers 8a and 22a which are the examples of the present invention, the cutting resistances when the values F1 and the values of F1/F2 were set to the same condition and the values H1 and the values of H1/H2 were varied were compared to each other. As a result, the difference therebetween was 30 N. Therefore, it is considered that the width of the negative honing 15 has a greater influence on a reduction in cutting resistance.

On the other hand, since the sample numbers 27a and 28a, which are the comparative examples, had large values of H1/H2 which were 0.60 and 0.75, respectively, and large values of F1/F2 which were 0.60 and 0.75, respectively, the range in which cutting process is performed within the width of the negative honing is long at or near the lowermost point 8 of the cutter body. Therefore, the targeted 10 % reduction in cutting resistance was not achieved.

Moreover, in the sample numbers 27a and 28a, chattering vibration occurred during cutting. Particularly in a case of the condition such as a long overhang of 250 mm, the occurrence of chattering vibration became prominent, and the chipping of the main cutting edge was induced. Since this leads to a damage in the spindle of a tool machine, the tool machine used in the cutting tests with the BT50 spindle having the spindle output of 15 KW couldn't perform highly efficient high-feed processing.

Next, the evaluation results for the chipping resistance of main cutting edges will be described. As described above, the evaluation for the chipping resistance of a main cutting edge was made by visually checking the presence/absence of the occurrence of chipping in the cutting edge when planar cutting process by heavy interrupted cutting was performed for 60 minutes. The results of the tests for evaluating chipping resistance were also shown in Table 1.

As shown in Table 1, since all of the five inserts in each of the sample numbers 1a to 23a, 27a and 28a could perform processing without chipping in the tests of cutting process regarding chipping resistance lasted for 60 minutes, the "○" marks were shown in the section of chipping resistance in the evaluation results shown in Table 1.

In the sample number 24a, however, all of the five inserts were not able to perform processing for 60 minutes, resulting in the occurrence of the breakages. Then, the amounts of time during which inserts performed cutting before the occurrences of the breakages were 37 minutes, 40 minutes, 50 minutes, 43 minutes, and 49 minutes, respectively.

Similarly, four of the five inserts in the sample number 25a and two of the five inserts in the comparative example 26a could not perform processing for 60 minutes, resulting in the chipping. Regarding the evaluation results for the chipping resistance of the main cutting edge, if at least one of the five inserts was chipped, the "×" mark was shown in the section of chipping resistance showing the evaluation results in Table 1.

After performing the tests for evaluating chipping resistance, the cutting edges were observed, and it was found that the positions at which the above-described chipping occurred were each near the lowermost point 8 in the main cutting edge of the insert attached to the cutter body. In view of this, it is concluded that the cause of the occurrence of chipping lies in a lack in the cutting edge strength due to the small widths of the negative honing and the land at or near the lowermost point 8 of the main cutting edge.

Moreover, in view of this, it was found that the value H1 and the value F1 are preferably set to be 0.03 mm or more in order to maintain chipping resistance. Particularly, since the chip thickness at or near the lowermost point 8 of the main cutting edge is approximately 0.06 mm, chipping resistance can be ensured if the value H1 is about a half or more of the chip thickness.

From the above-described test results, it was found that the inserts of the sample numbers 1a to 23a, which are the examples of the present invention, showed favorable results in the overall judgment on the two items, i.e., cutting resistance and chipping resistance (see "overall judgment" in the rightmost section in Table 1), and in these inserts, it was possible to reduce cutting resistance without deteriorating the chipping resistance. Therefore, it became clear that the sample numbers 1a to 23a are indexable milling cutters suitable for highly efficient high-feed processing as compared to the sample number 29a which is a conventional example.

Second Embodiment (not part of the invention)

Next, a second embodiment will be described. The indexable milling cutter according to the second embodiment is an indexable milling cutter in which an insert having a generally parallelogram plate shape is attached to a cutter body so that a reduction in cutting resistance is achieved while maintaining the chipping resistance of a main cutting edge, thereby being suitable for high-feed processing enabling highly efficient processing. As described above, the second embodiment has characteristics as follows.

That is, the second embodiment is an indexable milling cutter including an insert attached thereto which can be attached to and detached from a cutter body and which has a generally parallelogram plate shape with short sides and long sides as seen in a plan view, having characteristics such that:

the insert includes a main cutting edge having a circular arc shape in each of acute-angle portions opposing each other; an upper surface thereof including the main cutting edge is used as a rake face; and a negative honing and a land are provided extending from a ridge line portion of the main cutting edge;

when the insert is attached to the cutter body, the main cutting edge of the insert has a lowermost point in the cutter body and a most peripheral point in the cutter body, and the shape of the main cutting edge from the lowermost point to the most peripheral point is a precise circular arc shape; and

a width H of the negative honing gradually increases from the lowermost point toward the most peripheral point.

Moreover, in the second embodiment, the precise circular arc shape of the main cutting edge is a 1/4 to 3/8 circular arc.

Moreover, in the second embodiment, a width F of the land is formed so as to gradually increase from the lowermost point toward the most peripheral point.

Moreover, in the second embodiment, the width H of the negative honing and the width F of the land are set so that a relationship of:

$$1.00 \leq F/H \leq 1.50$$

is satisfied.

Moreover, in the second embodiment,

$$0.03 \text{ mm} \leq H1 \leq 0.10 \text{ mm}, \; 0.15 \leq H1/H2 \leq 0.50,$$

$$0.03 \text{ mm} \leq F1 \leq 0.10 \text{ mm}, \; 0.15 \leq F1/F2 \leq 0.50,$$

are satisfied, where H1 denotes the width of the negative honing and F1 denotes the width of the land at the lowermost point when the insert is attached to the cutter body, and H2 denotes the width of the negative honing and F2 denotes the width of the land at the most peripheral point.

Moreover, in the second embodiment, as seen in a side view from a side of the short side of the insert, the main cutting edge is shaped in a protruding shape in an upper surface direction of the insert toward the side of the short side; and

$$0° < a \leq 10°$$

is satisfied, where $\underline{a}$ denotes an angle between a line which passes through a highest point in terms of a height from a lower surface of the insert to the main cutting edge and which is parallel to the lower surface of the insert and a line which connects the highest point with a lowest point in terms of the height from the lower surface of the insert to the main cutting edge.

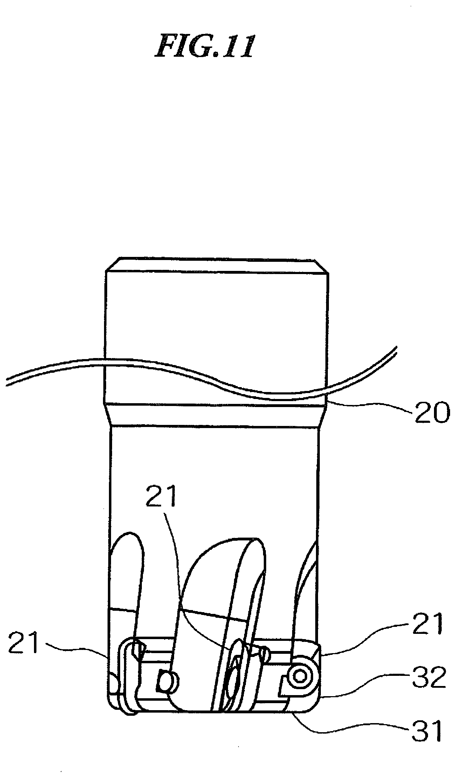

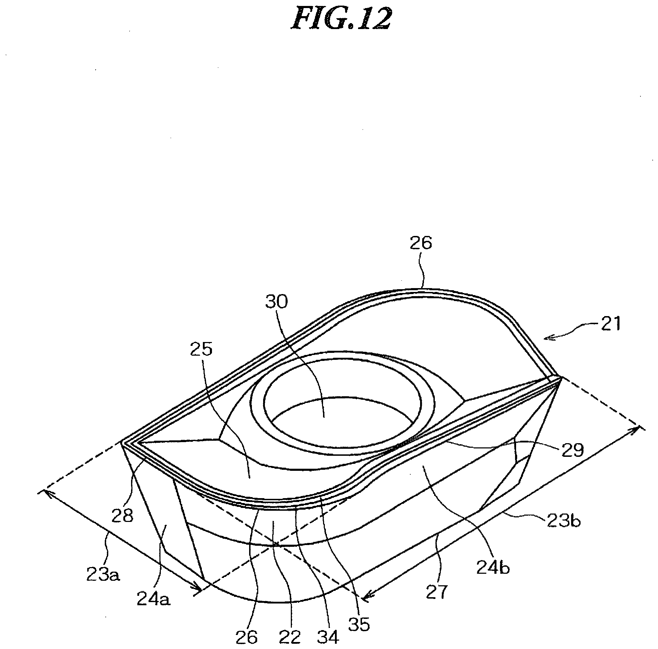

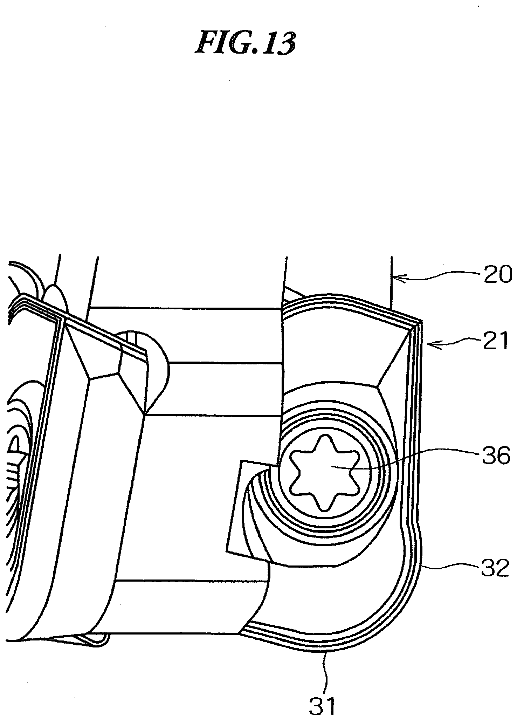

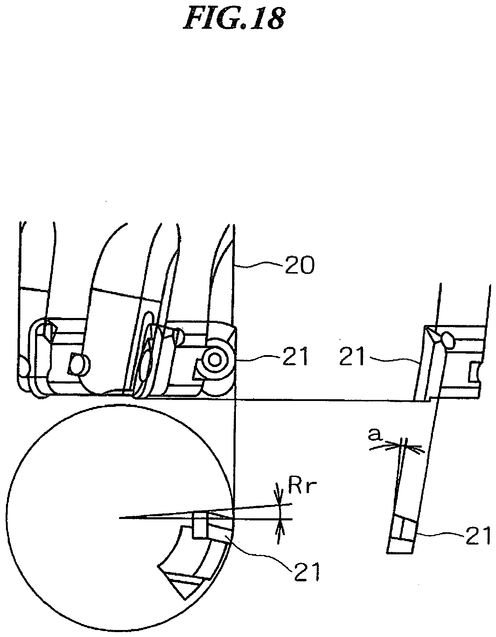

Fig. 11 is a side view showing an example of a second embodiment of the indexable milling cutter. Fig. 12 is a diagram showing an example of an embodiment of an insert to be attached to the indexable milling cutter shown in Fig. 11. Figs. 13 to 17 are diagrams for illustrating the configuration of the insert shown in Fig. 12. Fig. 18 is a diagram for illustrating an attachment angle, etc, when the insert is attached to the indexable milling cutter shown in Fig. 11.

The indexable milling cutter according to the second embodiment shown in Fig. 11 shows a state in which an insert 21 is attached to a cutter body (tool holder) 20.

As shown in Fig. 12, the basic shape of the insert 21 is a generally parallelogram shape as seen in a plan view and a plate shape as seen in a side view. The insert 21 includes corner portions 22 formed at acute-angle portions opposing each other on the crossing ridge line between an upper surface thereof and a side surface thereof.

The side surface on the side of a short side 23a and the side surface on the side of a long side 23b which are adjacent to each other with the corner portion 22 interposed therebetween are used as a flank face 24a and a flank face 24b, respectively. The upper surface including the corner portions 22 is used as a rake face 25. A main cutting edge 26 is formed in the corner portion 22.

The flank face 24a on the side of the short side 23a and the flank face 24b on the side of the long side 23b are formed as side surfaces inclined in the outward direction of the insert 21 from a lower surface 27, which is the seating surface of the insert 21, toward the rake face 25, which is an upper surface. The crossing ridge line between the flank face 24a and the rake face 25 is defined as a ridge line 28, and the crossing ridge line between the flank face 24b and the rake face 25 is defined as a ridge line 29.

The rake face 25 is formed on the upper surface opposing the lower surface 27 which is the seating surface of the insert 21. An attachment hole 30 running through the upper coop face 25 and the lower surface 27 is provided at a generally center portion of the upper surface (rake face) 25 of the insert 21.

The attachment hole 30 is a hole for fixing the insert 21 to the cutter body 20 via a clamp screw 36 (see Fig. 13). By rotating the insert 21 by 180° about the attachment hole 30 so as to change the attachment direction thereof, it becomes possible to use two cutting edges with the same insert 21.

Fig. 13 is a diagram showing, on an enlarged scale, a portion at which the insert 21 is attached to the indexable milling cutter according to the second embodiment shown in Fig. 11. As shown in Fig. 13, when attaching the insert 21 to the cutter body 20, the insert is attached so that the main cutting edge 26 of the insert 21 has a lowermost point 31 of the cutter body 20, i.e., the indexable milling cutter, and a most peripheral point 32 of the cutter body 20.

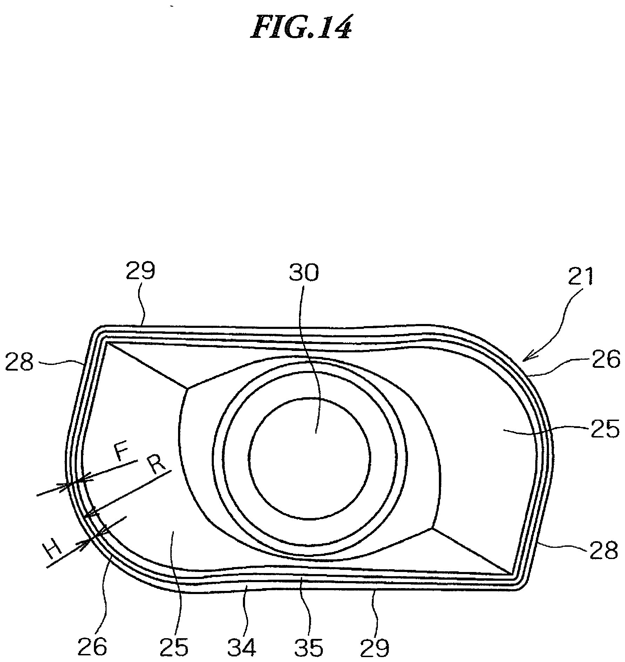

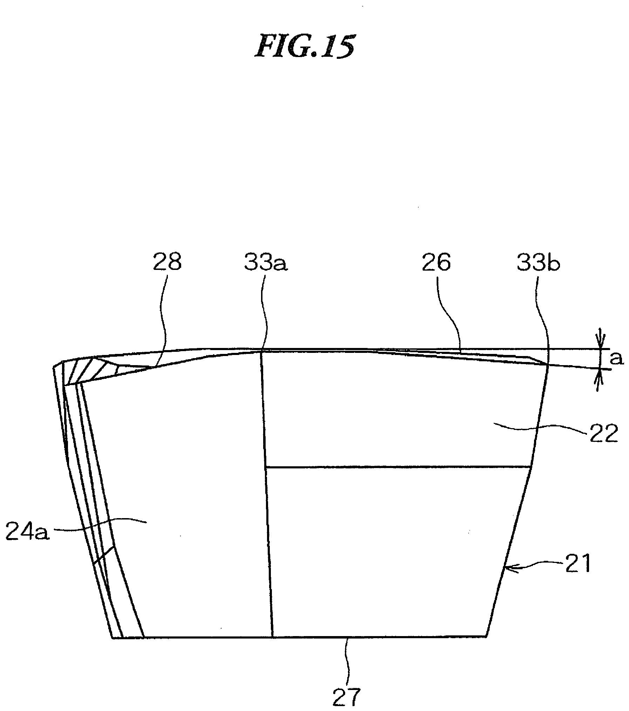

Next, the detailed configuration of the insert 21 will be described with reference to Figs. 14 and 15. Fig. 14 is a top view of the insert 21, and Fig. 15 shows a side view on the side of the short side 23a of the insert 21. As shown in Fig. 14, a negative honing 34 and a land 35 are provided along the entire circumference on the rake face side of the main cutting edge 26 of the insert 21. As shown in Fig. 15, the intersection between the main cutting edge 26 and the ridge line 28 is denoted as a highest point 33a.

The shape of the main cutting edge 26 of the insert 21 having the attachment hole 30 and having a generally parallelogram plate shape is a 3/8 circular arc. When the insert 21 is attached to the cutter body 20, the main cutting edge 26 at least has the lowermost point 31 and the most peripheral point 32 of the cutter body 20. Moreover, the shape of the cutting edge from the lowermost point 31 to the most peripheral point 32 is made to be a precise circular arc shape as seen in a plan view, for example, a 3/8 circular arc shape.

Note that if the shape of the cutting edge from the lowermost point 31 to the most peripheral point 32 of the main cutting edge 26 is a precise circular arc shape as described above, there is obtained an effect of facilitating the generation of CAM (computer-aided manufacturing) data when cutting a workpiece using this indexable milling cutter.

The following description will be made, while H denotes the width of the negative honing 34 and F denotes the width of the land 35, as shown in Fig. 14, within the range from the lowermost point 31 to the most peripheral point 32 of the main cutting edge 26 when the insert 21 is attached to the cutter body 20.

In the insert 21 used for the indexable milling cutter which is the second embodiment, while the shape of the main cutting edge 26 is a precise circular arc shape as seen in a plan view, the radius R (see Fig. 14) of the precise circular arc is preferably set to be 2 to 3 mm. This is for obtaining a sufficient cutting edge strength.

If the radius R is smaller than this range, chipping may possibly occur. If the radius R is greater than this range, the machining allowance for cutting process is excessively increased, failing to sufficiently use the tool for an intended cutting purpose. Moreover, by setting the radius R to 2 to 3 mm, the cutting amount is limited, thereby making it possible to perform cutting by high-feed processing.

Furthermore, in order to maintain the shape of the insert with respect to the radius R of the main cutting edge 26, a width on the side of the short side 23a is preferably 6.1 mm to 9.12 mm, and a width on the side of the long side 23b is preferably 11.7 mm to 17.1 mm.

As with the above-described indexable milling cutter representing the first embodiment of the present invention, for the purpose of enabling high-feed processing, the negative honing 34 and the land 35 are provided on the rake face side of the main cutting edge 26 also in the indexable milling cutter which is the second embodiment in order to improve the chipping resistance of the main cutting edge 26, Particularly, in order to improve the chipping resistance of the cutting edge in the most peripheral point 32 of the indexable milling cutter, thereby increasing the cutting edge strength.

However, whereas larger widths of the negative honing 34 and the land 35 lead to increased chipping resistance, cutting resistance is increased, thereby increasing a load on a machine tool used for cutting, e.g., a machine tool such as a machining center. Thus, it is impossible to perform highly efficient high-feed processing.

Therefore, regarding the insert 21 used in the indexable milling cutter which is a second embodiment, as with the above-described indexable milling cutter representing the first embodiment of the invention of the present application, the widths of the negative honing 34 and the land 35 are set so as to have small ranges as described above as an indexable milling cutter for high-feed processing in which when the rigidity of a workpiece is weak, chattering vibration, or the like, is likely to occur during cutting. In contrast, if chipping of the cutting edge is likely to occur due to heavy interrupted cutting, the ranges need to be set large.

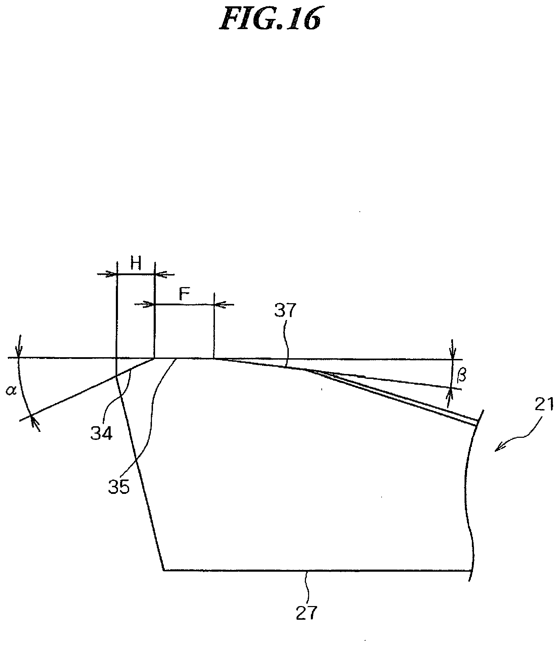

Fig. 16 shows that the width of the negative honing 34 is H and the width of the land 35 is F within the range from the lowermost point 31 of the main cutting edge 26 to the most peripheral point 32 of the main cutting edge 26 when the insert 21 shown in Fig. 14 is attached to the cutter body 20. Fig. 16 also shows an angle $\alpha$ (degrees) of the negative honing 34 and a rake angle $\beta$ (degrees) of a breaker groove 37.

Note that the width H of the negative honing 34 represents the length of the negative honing 34 projected on the surface parallel to the base 27 of the insert 21, and the width F of the land 35 represents the length of the land 35 projected on the surface parallel to the base 27 of the insert 21.

As described above, the angle $\alpha$ of the negative honing 34 represents an angle between the surface parallel to the base 27 of the insert 21 and the inclined surface of the negative honing 34. The rake angle $\beta$ of the breaker groove 37 represents an angle between the surface parallel to the base 27 of the insert 21 and the inclined surface of the breaker groove 37.

The following description will be made while H1 denotes the width H of the negative honing 34 and F1 denotes the width F of the land 35 at or near the lowermost point 31 when the insert 21 is attached to the cutter body 20. The lowermost point 31 or the vicinity of the lowermost point 31 is sometimes stated as the "lowermost point 31." In such a case, the "lowermost point 31" represents the lowermost point 31 or the vicinity thereof.

Similarly, a description will be made while H2 denotes the width H of the negative honing 34 and F2 denotes the width F of the land 35 at or near the most peripheral point 32. In the following description, the most peripheral point 32 or the vicinity of the most peripheral point 32 is sometimes stated as the "most peripheral point 32." In such a case, the "most peripheral point 32" represents the most peripheral point 32 or the vicinity thereof.

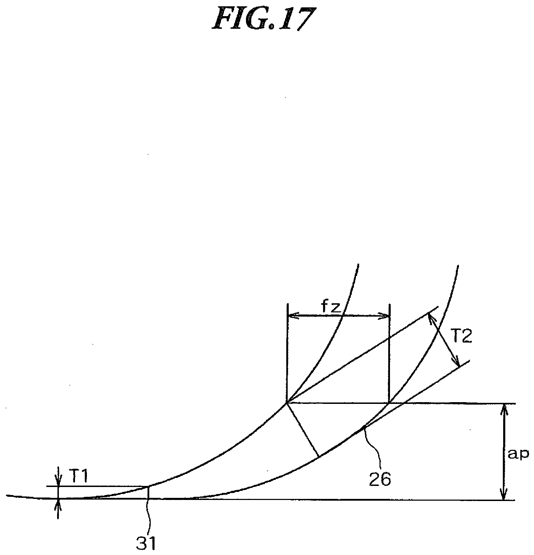

Fig. 17 is a schematic diagram for illustrating cutting thicknesses during cutting process in the main cutting edge 26 of the insert 21 attached to the cutter body 20. Each of cutting thicknesses T1 and T2 shown in Fig. 17 shows a chip thickness in the direction in which the cutting tip of the main cutting edge 26 moves when fed with a feed per tooth fz.

In the second embodiment, the thickness of a chip generated by the main cutting edge 26 with a precise circular arc shape located on the lower side in the rotation axis direction of the indexable milling cutter is not constant over the entire main cutting edge 26 in the length direction thereof.

For example, if the radius R of the main cutting edge 26 is 3 mm, a maximum chip thickness T2 at the most peripheral point 32 is approximately 0.5 mm, and a chip thickness T1 at the lowermost point 31 is approximately 0.1 mm if processing is performed under such high-feed processing cutting conditions that the value fz, which is a feed per tooth, is 1.0 mm and the value ap, which is a cutting depth, is 1.0 mm. That is, the value T1 becomes approximately 1/5 of the value T2.

Thus, it is possible to realize an indexable milling cutter capable of performing high-feed processing while reducing the cutting resistance and simultaneously improving the chipping resistance by respectively setting an appropriate width H of the negative honing 34 and an appropriate width F of the land 35 depending on the portions of the cutting edge, i.e., at the most peripheral point 32 at which the chip thickness becomes the thickest, and at the lowermost point 31 at which the chip thickness becomes the thinnest.

As described above, in order to reduce cutting resistance, H1 which is the width of the negative honing 34 and F1 which is the width of the land 35 at or near the lowermost point 31 at which the chip thickness is the thinnest are set to be small. Here, even if the values H1 and F1 are set to be small, the chip thickness is still thin.

Thus, the chipping resistance is not significantly deteriorated. On the other hand, at or near the most peripheral point 32 at which the chip thickness is the largest, it is necessary to improve the chipping resistance by increasing H2 which is the width of the negative honing 34 and F2 which is the width of the land 35. Here, chipping resistance is improved placing a priority thereon at the most peripheral point 32 in the main cutting edge 26 of the insert 21.

In the indexable milling cutter according to the second embodiment, the widths of the negative honing 34 and the land 35 of the insert 21 are gradually increased from the lowermost point 31 toward the most peripheral point 32 of the indexable milling cutter which is a rotary tool so as to make it possible to achieve the chipping resistance of the main cutting edge 26 and a reduction in resistance while the value H1 and the value F1 at the lowermost point 31 of the main cutting edge 26 are set to be the minimum values, and the value H2 and the value F2 at the most peripheral point 32 of the main cutting edge 26 are set to be the maximum values.

Note that the phrase, "to gradually increase," represents either a case of continuously increasing from the lowermost point 31 toward the most peripheral point 32 or a case where the widths are not continuously increased, i.e., the widths are not partially increased so as to include a portion of a constant width.

In contrast, in the conventional indexable milling cutter for high-feed processing, the negative honing of the insert used in this tool has a constant width of approximately 0.2 mm, and the land also has a constant width. Therefore, cutting is performed within the negative honing near the lowermost point of the indexable milling cutter. Thus, the cutting quality is deteriorated, and large cutting resistance is therefore generated.

In the insert 21 used in the indexable milling cutter which is the second embodiment, it is necessary to set the value H1 (mm), which is the width of the negative honing 34 of the main cutting edge 26, to $0.03 \leq H1 \leq 0.10$. The reason for this is as follows. When the chip thickness at the lowermost point 31 is calculated based on the value fz during the process and the shape of the main cutting edge 26 and the value H1 suitable for cutting is set based on the calculated value, if the value H1 is less than 0.03 mm, chipping resistance is significantly lowered.

Rather than the influence of the chip thickness, this is resulted from a lack in the cutting edge strength which leads to the occurrence of chipping due to an impact generated when the lowermost point 31 of the insert 21 comes into contact with a workpiece during cutting. In contrast, if the value H1 is greater than 0.10 mm, the cutting resistance is increased, thereby creating a problem.

Next, after setting the value H1, the value H2 (mm), which is the width of the negative honing 34, needs to be set so that the value of H1/H2, which is the ratio between the value H1 and the value H2, is 0.15 to 0.50. Then, there is obtained the best balance between the chipping resistance of the main cutting edge 26 and the cutting resistance, and it is possible to reduce cutting resistance by 10 % or more without deteriorating the chipping resistance.

Note however that the value H2 is preferably set within the range of 0.10 to 0.50 mm in view of the chipping resistance of the cutting edge and an increase in cutting resistance. Thus, even when the value H1 is set to be a width approximately 30 % larger than the chip thickness T1 near the lowermost point 31, the range in which cutting is performed within the width of the negative honing 34 is small as described above. Therefore, it is possible to reduce cutting resistance by 10 % or more.

Next, in the insert 21, it is necessary to set the value F1 (mm), which is the width of the land 35 of the main cutting edge 26, to be $0.03 \leq F1 \leq 0.10$. This is because the value F1 of less than 0.03 mm cannot effectively increase cutting edge strength and chipping resistance is thereby reduced. If cutting strength lacks, chipping occurs by an impact generated when the lowermost point 31 of the insert 21 comes into contact with a workpiece during cutting. In contrast, if the value F1 is greater than 0.10 mm, there is created a problem of an increase in cutting resistance.

Next, after setting the value F1, the value F2 (mm), which is the width of the land 35, needs to be set so that the value of F1/F2 is 0.15 to 0.50. Thus, there is obtained an effect of delaying the progress of wear on the rake face 25 of the main cutting edge 26. As the value F2 becomes larger, there is obtained a greater effect of delaying wear on the rake face 25, especially at the most peripheral point 32, thereby improving the chipping resistance.

Note however that the value F2 is preferably set within the range of 0.10 mm to 0.50 mm in view of the chipping resistance of the cutting edge and an increase in cutting resistance. When the value F2 is excessively large, the removal ability of chips is lowered, thereby increasing the cutting resistance. This is because there is created a problem of hindering the flow which guides chips to the breaker groove 37.

In the insert 21 used in the second embodiment, the value of F/H between the width H of the negative honing 34 and the width F of the land 35 is preferably $1.00 \leq F/H \leq 1.50$. If the value of F/H is set to be 1.00 or greater, the width F of the land 35 becomes greater than the width H of the negative honing 34. Thus, at the lowermost point 31, the cutting edge strength can be improved while keeping the cutting resistance low. At the most peripheral point 32, on the other hand, the width H2 of the negative honing 34 becomes smaller than the width F2 of the land 35.

Thus, a reduction in resistance can be achieved while maintaining the chipping resistance. If the value of F/H is greater than 1.50, the width F of the land 35 becomes excessively larger than the width H of the negative honing 34. Thus, the removal ability of chips is lowered, thereby possibly hindering the flow which guides chips to the breaker 37. Thus, the value of F/H is preferably

$$1.00 \leq F/H \leq 1.50.$$

In the insert 21 used in the second embodiment, as seen in a side view in the direction on the side of the short side 23a, the cutting edge ridge line 28 is preferably shaped in a protruding curved line shape (protruding shape) in the upper surface direction of the insert 21. This is because an angle between the rake face 25 of the insert 21 and the surface of a workpiece during cutting process is on the negative side as compared to the insert having a constant insert thickness, thereby reducing an impact generated when contacting with the workpiece and thus alleviating a sudden increase in cutting resistance.

Moreover, when the insert 21 is attached to the cutter body 20, the radial rake angle of the insert 21 is on the negative side, thereby increasing the cutting edge strength. The height from the lower surface 27 to the main cutting edge 26 needs to be continuously decreased toward the direction of the most peripheral point 32. Thus, it is possible to improve the cutting edge strength without forming an angled portion to be the starting point of the breakage of the insert 21.

Next, as shown in Fig. 15, where $\underline{a}$ (degrees) denotes an angle between a surface which passes through the highest point 33a in terms of the height from the lower surface 27 of the insert 21 to the main cutting edge 26 and which is parallel to the lower surface 27 of the insert 21 and a line which connects the highest point 33a with a lowest point 33b in terms of the height from the lower surface 27 of the insert 21 to the main cutting edge 26, the angle value $\underline{a}$ is preferably set to be $0° < a \leq 10°$. Moreover, the angle value $\underline{a}$ is more preferably set to be $3° \leq a \leq 5°$.

Fig. 18 shows the relationship between the above-described angle value $\underline{a}$ and the radial rake angle (Rr). Since the main cutting edge 26 has a protruding shape as described above, the angle value $\underline{a}$ is greater than 0°. If the value a is greater than 10°, the cutting quality is deteriorated and the radial rake angle (Rr) becomes excessively large, thereby increasing cutting resistance. Moreover, the thickness of the insert 21 is reduced, failing to obtain a sufficient strength. Therefore, the value a is preferably set to be $0° < a \leq 10°$.

Note that the highest point 33a and the lowest point 33b described above represent actual positions in the insert 21. Note also that the most peripheral point 32 is a position created when the insert 21 is attached to the cutter body 20, and the lowest point 33b and the most peripheral point 32 are at approximately the same position when the insert 21 is attached to the cutter body 20.

The angle $\alpha$ (degrees) of the negative honing 34 shown in Fig. 16 is preferably set to be $5° \leq \alpha \leq 30°$. Note that the value $\alpha$ may be varied between the lowermost point 31 to the most peripheral point 32. Furthermore, by providing the breaker groove 37 on the rake face 25, it is possible to reduce cutting resistance. The rake angle β (degrees) of the breaker groove 37 shown in Fig. 16 is preferably set to be $\beta \leq 20°$, and more preferably, $10° \leq \beta \leq 20°$.

Cutting Test Example 2

Next, the procedure of experimentally producing the indexable milling cutter according to the second embodiment and conducting the cutting test (hereinafter, referred to as "Cutting Test Example 2"), and the results of the test will be described.

First, as inserts for being attached to the indexable milling cutter according to the second embodiment so as to conduct the cutting test, 11 kinds of inserts from the sample number 1b to 11b shown in Table 2 were produced. The produced inserts were made of WC-based cemented carbide which were produced by using a powder metallurgy technique.

The size of the produced insert was such that the width on the side of the short side 23a was 6.35 mm, the thickness of the insert was 3.18 mm, and the value R, which is the radius of the main cutting edge, was 3 mm. The side surface on the side of the short side 23a was in a flat shape. The provision of the negative honing in the insert of the sample number 1b was performed during the settings of the shape of a press die. Using a die press machine, the insert body was molded.

The other sample numbers 2b to 11b were produced by the same method as that of the sample number 1b except that the width of the negative honing 34 and the width of the land 35 were varied by changing the settings of the shape of the molding die. Note that in all of the produced inserts, the precise circular arc shape of the main cutting edge was a 3/8 circular arc.

Referring to the sample numbers 1b to 4b, there were produced inserts which are the examples of the present embodiment having the above-described configuration of the second embodiment regarding the width of the negative honing, the width of the land, etc.

Referring to the sample numbers 5b to 9b which are comparative examples, there were produced inserts having a configuration departing from the range of the width of the negative honing, the range of the width of the land, etc., which are shared by the above-described inserts of the examples. As the insert of the sample number 10b which is a conventional example, there was produced the insert in which the negative honing 34 had a constant width of 0.20 mm and the land 35 had a constant width of 0.20 mm along the entire main cutting edge. As the insert of the sample number 11b which is also a conventional example, there was produced the insert in which the negative honing had a constant width of 0.03 mm and the land had a constant width of 0.03 mm. In both of the sample numbers 10b and 11b, the side surface on the side of the short side 23a was in a flat shape.

As the cutting conditions for Cutting Test Example 2, Cutting Condition 1, which is a conventional standard cutting condition to be described blow, and Cutting Condition 2, which is a high-efficient cutting condition, were used, and the possibility of high-efficient processing was evaluated.

Cutting Condition 1 in Cutting Test Example 2 was set as follows.

Cutting Condition 1: standard cutting condition
Processing method:        dry cutting process
Cutting velocity Vc:        120 m/min
Number of revolutions n:    1193 min$^{-1}$
Feed per tooth fz:        0.1 mm/tooth
Axial cutting amount ap:    3.0 mm
Radial cutting amount ae:    20 mm
Overhang:            100 mm

Cutting Condition 2 in Cutting Test Example 2 was set as follows.

Cutting Condition 2: high-efficient cutting condition
Processing method:        dry cutting process
Cutting velocity Vc:        120 m/min
Number of revolutions n:    1193 min$^{-1}$
Feed per tooth fz:        1.0 mm/tooth
Axial cutting amount ap:    1.0 mm
Radial cutting amount ae:    20 mm
Overhang:            100 mm

First, in Cutting Test Example 2, cutting resistance by planar cutting process was measured using a single edge such that the insert of the sample number 1b was attached to a cutter body having a tool diameter of 32 mm. The measurement of cutting resistance in this planar cutting process was performed by using, as a workpiece, the S50C material having a flat processed surface, and performing cutting for ten minutes using Cutting Condition 2 which is a high-efficient cutting condition. Then, it was determined to be "effective" for a reduction in cutting resistance if the measured value of the cutting resistance was reduced by 10 % or more as compared to the sample number 10b which is a conventional example.

Next, using the sample numbers 1b to 11b, planar cutting process was performed and chipping resistance in the main cutting edge was evaluated. The S50C material was used as a workpiece in the evaluation of chipping resistance, and cutting process was performed on the flat processed surface. As the cutting conditions, two conditions, i.e., Cutting Condition 1 and Cutting Condition 2 described above in Cutting Test Example 2, were used in the planar cutting process.

In the tests for evaluating chipping resistance, five inserts were used for each of the sample numbers 1b to 11b, and cutting was performed for 50 minutes using a single edge such that one insert was attached to the cutter body for each of the tests for evaluating chipping resistance. The tests for evaluating chipping resistance were conducted sequentially for all of these five inserts. The evaluation of chipping resistance was made based on the presence/absence of the occurrence of chipping in the cutting edge during the cutting lasted for 50 minutes.

The results of the cutting evaluation for chipping resistance are shown in Table 2, where the "○" mark represents that all of the five inserts could perform processing without chipping in the cutting lasted for 50 minutes, the "×" mark represents that at least one of the five inserts was chipped, and the "Δ" mark represents that no chipping has occurred but chattering vibration has occurred.

If the result of cutting evaluation for chipping resistance under Cutting Condition 1 and that under Cutting Condition 2 both showed the "○" marks, the "○" mark was shown in the result of the overall judgment shown in Table 2, and if any one of the two showed the "Δ" mark or the "×" mark, the "×" mark was shown therein. Note that Table 2 also shows the value H1, the value of H1/H2, the value F1, and the value of F1/F2 for each of the sample numbers 1b to 11b.

Table 2

| Sample Number | Shape of main cutting edge | | | | | | | | | Evaluation results | | | | | | Overall judgment | Remarks |
|---|---|---|---|---|---|---|---|---|---|---|---|---|---|---|---|---|---|
| | Negative honing | | | Land | | | F/H | Shape as seen in side view | | Planar cutting process | | | | | | | |
| | | | | | | | | Shape of cutting edge | a (°) | Cutting resistance (N) | Rate of reduction in cutting resistance (%) | Evaluation of chipping resistance | | | | | |
| | H1 (mm) | H2 (mm) | H1/H2 | F1 (mm) | F2 (mm) | F1/F2 | | | | | | Cutting condition 1 | | Cutting condition 2 | | | |
| 1b | 0.03 | 0.20 | 0.15 | 0.03 | 0.20 | 0.15 | 1.00 | Flat | - | 1682 | 12.4 | ○ | | ○ | | ○ | Examples of Present embodiment |
| 2b | 0.06 | 0.20 | 0.30 | 0.06 | 0.20 | 0.30 | 1.00 | Flat | - | 1694 | 11.7 | ○ | | ○ | | ○ | |
| 3b | 0.09 | 0.20 | 0.45 | 0.09 | 0.20 | 0.45 | 1.00 | Flat | - | 1702 | 11.3 | ○ | | ○ | | ○ | |
| 4b | 0.10 | 0.20 | 0.50 | 0.10 | 0.20 | 0.50 | 1.00 | Flat | - | 1709 | 10.9 | ○ | | ○ | | ○ | |
| 5b | 0.00 | 0.00 | - | 0.03 | 0.20 | 0.15 | - | Flat | - | 1690 | 11.9 | × | Chipped at early stage of cutting | × | Chipped at early stage of cutting | × | Comparative Examples |
| 6b | 0.01 | 0.20 | 0.05 | 0.01 | 0.20 | 0.05 | 1.00 | Flat | - | 1683 | 12.3 | × | Chipped at early stage of cutting | × | Chipped at early stage of cutting | × | |
| 7b | 0.02 | 0.20 | 0.10 | 0.02 | 0.20 | 0.10 | 1.00 | Flat | - | 1690 | 11.9 | × | Chipped at early stage of cutting | × | Chipped at early stage of cutting | × | |
| 8b | 0.12 | 0.20 | 0.60 | 0.12 | 0.20 | 0.60 | 1.00 | Flat | - | 1742 | 9.2 | ○ | | × | Unable to cut due to large chattering | × | |
| 9b | 0.15 | 0.20 | 0.75 | 0.15 | 0.20 | 0.75 | 1.00 | Flat | - | 1750 | 8.8 | ○ | | × | Unable to cut due to large chattering | × | |

(continued)

| Sample Number | Shape of main cutting edge | | | | | | | | | Evaluation results | | | | | | Overall judgment | Remarks |
|---|---|---|---|---|---|---|---|---|---|---|---|---|---|---|---|---|---|
| | Negative honing | | | Land | | | F/H | Shape as seen in side view | | Planar cutting process | | | | | | | |
| | H1 (mm) | H2 (mm) | H1/H2 | F1 (mm) | F2 (mm) | F1/F2 | | Shape of cutting edge | a (°) | Cutting resistance (N) | Rate of reduction in cutting resistance (%) | Evaluation of chipping resistance | | | | | |
| | | | | | | | | | | | | Cutting condition 1 | | Cutting condition 2 | | | |
| 10b | 0.20 | 0.20 | 1.00 | 0.20 | 0.20 | 1.00 | 1.00 | Flat | - | 1919 | - | ○ | | × | Unable to cut due to large chattering | × | Conventional Examples |
| 11b | 0.03 | 0.03 | 1.00 | 0.03 | 0.03 | 1.00 | 1.00 | Flat | - | 1900 | - | × | Chipped at early stage of cutting | × | Chipped at early stage of cutting | × | |

From the evaluation results shown in Table 2, in the measurement of cutting resistance by planar cutting process, the cutting edge resistance value of the planar cutting process at a point in time when cutting was performed for 10 minutes was 1919 N in the sample number 10b of the conventional example in which the negative honing had a constant width of 0.20 mm and the land had a constant width of 0.20 mm.

Using, as a reference value, the cutting edge resistance value (1919 N) of the sample number 10b which is a conventional example, it was determined to be "effective" for a reduction in cutting resistance if cutting resistance was reduced by 10 % or more.

The sample numbers 1b to 9b were evaluated for the effectiveness of a reduction in cutting resistance by 10 % or more in planar cutting process. As a result, the sample numbers 1b to 7b achieved the targeted 10 % or more reduction in cutting resistance. Moreover, the sample numbers 1b to 4b, which are the examples of the present, embodiment could perform processing without causing chattering vibration. The reduction in cutting resistance led to a reduction in a load on the machine tool.

Particularly, the value H1 is preferably set to be equal to or less than the chip thickness near the lowermost point of the cutter body. The sample numbers 8b and 9b, which are the comparative examples, had large values of H1/H2 which were 0.60 and 0.75, respectively, and large values of F1/F2 which were 0.60 and 0.75, respectively.

Thus, the range in which cutting is performed within the width of the negative honing is long at or near the lowermost point of the cutter body. Therefore, the targeted 10 % reduction in cutting resistance could not be achieved. Furthermore, in the sample numbers 8b and 9b, chattering vibration occurred during cutting.

Since cutting with such cutting resistance or the occurrence of chattering vibration leads to a damage in the spindle of a tool machine, the tool machine used in the cutting tests with the BT50 spindle having the spindle output of 15 KW couldn't perform highly efficient high-feed processing.

Next, in the evaluation for chipping resistance of the main cutting edge, the presence/absence of chipping was checked during processing until the completion of the cutting time of 50 minutes for each of Cutting Condition 1 and Cutting Condition 2. The check results are shown in the section of evaluation of chipping resistance in Table 2.

In view of comparison between chipping resistance under Cutting Condition 1 and that under Cutting Condition 2, chattering occurred and it was determined to be unable to cut under Cutting Condition 2 in the sample numbers 8b and 9b, which are comparative examples, and the sample number 10b which is a conventional example. On the other hand, in the sample numbers 1b to 4b, which are the examples of the present embodiment, no chipping occurred under both of Cutting Condition 1 and Cutting Condition 2.

It is considered that the reason why chattering vibration occurred in the sample numbers 8b and 9b which are comparative examples and the sample number 10b which is a conventional example due to a difference in cutting conditions between Cutting Condition 1 and Cutting Condition 2 is an increase in cutting resistance caused by a difference in the tool shapes, i.e., a difference in the width of the negative honing and the width of the land.

As shown in Table 2, in the sample numbers 5b to 7b which are comparative examples, chipping occurred at the early stage of cutting under each of both conditions, Cutting Condition 1 and Cutting Condition 2. From the observation of the cutting edges performed after the cutting tests, it was found that the places where the chipping occurred were each near the lowermost point of the main cutting edge.

Thus, it is considered that the cause of the occurrence of chipping lies in a lack of cutting edge strength resulted from the small negative honing width and the small land width at the lowermost point of the main cutting edge. Thus, it can be concluded that the value H1 and the value F1 need to be 0.03 mm or more in order to maintain chipping resistance.

Cutting Test Example 3

Next, cutting test example 3 (hereinafter, referred to as "Cutting Test Example 3") will be described. In Cutting Test Example 3, four kinds of inserts with the sample numbers 12c to 15c were newly produced using a method similar to that in Cutting Test Example 2 described above, and cutting resistance and chipping resistance were evaluated when the value of F/H was varied. Note that in the produced inserts, the value a, which is the above-described angle by the protruding shape of the side surface on the side of the short side 23a, was 3°.

Note also that in the sample numbers 12c and 13c, inserts were produced as the examples of the present embodiment so that the value of F/H satisfies the condition of "$1.00 \le F/H \le 1.50$" which the above-described configuration of the second embodiment has.

In the sample numbers 14c and 15c, inserts were produced as comparative examples so as not to satisfy the above-described condition of "$1.00 \le F/H \le 1.50$." In each of the newly produced inserts with the sample numbers 12c to 15c, the precise circular arc shape of the main cutting edge was a 3/8 circular arc.

Cutting Test Example 3 was conducted also on the sample number 2b according to the example of the present embodiment and the sample numbers 10b and 11b of the conventional examples which were produced in Cutting Test Example 2 described above and shown in Table 2.

In Cutting Test Example 3, the evaluation of cutting resistance in planar cutting process was made by using a method similar to that in Cutting Test Example 2 described above. Using Cutting Condition 2 described above which is a high-efficient processing condition, it was determined to be "effective" for a reduction in cutting resistance if a 10 % or more reduction in the cutting resistance value was obtained as compared to the sample number 10b which is a conventional example.

Moreover, in the evaluation of cutting resistance in side surface cutting process, the S50C material was used as a workpiece, and the cutting resistance when the most peripheral point 32 of the main cutting edge was used for cutting using the above-described Cutting Condition 2, which is a high-efficient processing condition, was measured. Then, as described above, it was determined to be "effective" for a reduction in cutting resistance if a 10 % or more reduction in the cutting resistance value was obtained as compared to the sample number 10b which is a conventional example.

Next, the evaluation for chipping resistance in planar cutting process and that in side surface cutting process were made. The evaluation for chipping resistance was made by using a method similar to that in Cutting Test Example 2 described above, and cutting tests were conducted using Cutting Condition 2 described above. Table 3 shows the results of the cutting tests according to Cutting Test Example 3.

Table 3

| Sample Number | Shape of main cutting edge | | | | | | | | | Evaluation results | | | | | | | Overall judgement | Remarks |
| | Negative honing | | | Land | | | F/H | Shape as seen in side view | | Planar cutting process | | | | Side surface cutting process | | | | |
| | H1 (mm) | H2 (mm) | H1/H2 | F1 (mm) | F2 (mm) | F1/F2 | | Shape of cutting edge | a (°) | Cutting resistance (N) | Rate of Rate of reduction in cutting resistance (%) | Evaluation of chipping resistance | | Cutting resistance (N) | Rate of reduction in cutting resistance (%) | Evaluation of chipping resistance | | |
| | | | | | | | | | | | | Cutting condition 2 | | | | Cutting condition 2 | | |
| 2b | 0.06 | 0.20 | 0.30 | 0.06 | 0.20 | 0.30 | 1.00 | Flat | - | 1694 | 11.7 | ○ | | 1706 | 12.8 | ○ | | ○ | |
| 12c | 0.06 | 0.20 | 0.30 | 0.09 | 0.30 | 0.30 | 1.50 | Flat | 3 | 1705 | 11.2 | ○ | Small wear value | 1700 | 13.1 | ○ | | ○ | Examples of Present embodiment |
| 13c | 0.06 | 0.20 | 0.30 | 0.08 | 0.27 | 0.30 | 1.33 | Flat | 3 | 1700 | 11.4 | ○ | Small wear value | 1690 | 13.6 | ○ | | ○ | |
| 14c | 0.06 | 0.20 | 0.30 | 0.12 | 0.33 | 0.36 | 2.00 | Flat | 3 | 1745 | 9.1 | Δ | Chattering occurred | 1790 | 8.5 | × | Unable to cut due to large chattering | × | Comparative Examples |
| 15c | 0.06 | 0.20 | 0.30 | 0.02 | 0.10 | 0.20 | 0.33 | Flat | 3 | 1682 | 12.4 | × | Chipped at early stage of cutting | 1654 | 15.5 | × | Chipped at early stage of cutting | × | |

29

| Sample Number | Shape of main cutting edge | | | | | | | | | Evaluation results | | | | | | | Overall judgement | Remarks |
|---|---|---|---|---|---|---|---|---|---|---|---|---|---|---|---|---|---|---|
| | Negative honing | | | Land | | | F/H | Shape as seen in side view | | Planar cutting process | | | | Side surface cutting process | | | | |
| | H1 (mm) | H2 (mm) | H1/H2 | F1 (mm) | F2 (mm) | F1/F2 | | Shape of cutting edge | a (°) | Cutting resistance (N) | Rate of Rate of reduction in cutting resistance (%) | Evaluation of chipping resistance | | Cutting resistance (N) | Rate of reduction in cutting resistance (%) | Evaluation of chipping resistance | | |
| | | | | | | | | | | | | | Cutting condition 2 | | | | Cutting condition 2 | | |
| 10b | 0.20 | 0.20 | 1.00 | 0.20 | 0.20 | 1.00 | 1.00 | Flat | - | 1919 | - | × | Unable to cut due to large chattering | 1957 | - | × | Unable to cut due to large chattering | × | Conventional Examples |
| 11b | 0.03 | 0.03 | 1.00 | 0.03 | 0.03 | 1.00 | 1.00 | Flat | - | 1900 | - | × | Chipped at early stage of cutting | 1947 | - | × | Chipped at early stage of cutting | × | |

First of all, from the evaluation results shown in Table 3, consideration for the evaluation results in planar cutting process in the sample numbers 2b, 12c, and 13c, which are the examples of the present embodiment and 14c and 15c, which are the comparative examples, was made based on Cutting Condition 2 described above. Note that a value of F/H shown in Table 3 represents a value at the lowermost point 31.

According to this consideration, cutting resistance in the sample number 14c, which is a comparative example and had a high F/H value of 2.00, was higher than those in the sample numbers 2b, 12c, and 13c. In the cutting test for chipping resistance in planar cutting process, chattering vibration occurred also in the sample number 14c.

While the sample number 15c, which is a comparative example and had a low F/H value of 0.33, showed a cutting resistance value lower than those of the sample numbers 2b, 12c, and 13c, chipping occurred in the cutting test for chipping resistance in planar cutting process. Thus, the cutting edge strength thereof was not sufficient.

The sample numbers 12c and 13c showed normal levels of wear, and the wear on the rake faces thereof was delayed as compared to the sample number 2b. It can be concluded that this is because the land widths larger than the negative honing widths led to an improvement in the cutting edge strength and thereby an improvement in chipping resistance.

Similarly, consideration for the evaluation results for chipping resistance and cutting resistance when engraving process was performed using Cutting Condition 2 in the sample numbers 2b, 12c, and 13c which are the examples of the present embodiment and the sample numbers 14c and 15c which are the comparative examples is as follows.

In the sample number 14c which is a comparative example, chattering vibration occurred, and it was determined to be unable to cut as shown in Table 3. It is considered that this is because the removal ability of chips was deteriorated and the cutting resistance was thereby increased.

While no chattering vibration occurred in the sample numbers 12c and 13c which are the examples of the present embodiment and the sample number 15c which is a comparative example, chipping was observed in the sample number 15c at the early stage of cutting. In view of comparison among the sample numbers 2b, 12c, and 13c, cutting resistance was reduced most in the sample number 13c in the side surface cutting process.

It is considered that this is because the land width larger than the negative honing width could reduce cutting resistance from the processed wall surface during the side surface cutting process, and the removal ability of chips in the sample number 13c was more favorable than those in the sample numbers 2b and 12c. Thus, it can be said that the value of F/H is preferably $1.00 \leq F/H \leq 1.50$.

Cutting Test Example 4

Next, the result of performing cutting test example 4 (hereinafter, referred to as "Cutting Test Example 4") will be described. In Cutting Test Example 4, six kinds of inserts with the sample numbers 16d to 21d were newly produced using a method similar to those in Cutting Test Examples 2 and 3 described above, and evaluation was made for the angle value $a$ made by the protruding shape of the side surface on the side of the short side.

Note that as the sample numbers 16d to 21d, there were newly produced inserts each having a shape satisfying the above-described values of H1, H2, H1/H2, F1, F2, F1/F2, and F/H (the value at the lowermost point 31), etc., which are the configurations of the above-described second embodiment. Moreover, in each of the newly produced inserts with the sample numbers 16d to 21d, the precise circular arc shape of the main cutting edge was a 3/8 circular arc.

Cutting tests according to Cutting Test Example 4 were conducted also on the sample number 1b shown in Table 2 which was produced in Cutting Test Example 2 described above and on the sample numbers 10b and 11b which were produced as the inserts of the conventional examples in Cutting Test Example 2 described above.

Note that the sample numbers 1b, and 16d to 21d were produced so that the relationship between the width H of the negative honing and the width F of the land was such that H1 = 0.03, H1/H2 = 0.15, F1 = 0.03, F1/F2 = 0.15, and F/H = 1.00 as shown in Table 4. In the cutting test example 4, cutting resistance in planar cutting process was measured and evaluation therefor was made. The evaluation of cutting resistance in planar cutting process was made as in Cutting Test Example 2 described above.

Using Cutting Condition 2 described above which is a high-efficient processing condition, it was determined to be "effective" for a reduction in cutting resistance if a 10 % or more reduction in the cutting resistance value was obtained as compared to the sample number 10b which is a conventional example. The evaluation results for the sample numbers 1b, and 16d to 21d which are the examples of the present embodiment and the sample numbers 10b and 11b which are the conventional examples are shown in Table 4.

Table 4

| Sample Number | Shape of main cutting edge | | | | | | | | | Evaluation results | | | | Remarks |
| | Negative honing | | | Land | | | F/H | Shape as seen in side view | | Planar cutting process | | Overall judgment | |
| | H1 (mm) | H2 (mm) | H1/H2 | F1 (mm) | F2 (mm) | F1/F2 | | Shape of cutting edge | a (°) | Cutting resistance (N) | Rate of reduction in cutting resistance (%) | | |
|---|---|---|---|---|---|---|---|---|---|---|---|---|---|
| 1b | 0.03 | 0.20 | 0.15 | 0.03 | 0.20 | 0.15 | 1.00 | Flat | 0 | 1682 | 12.4 | ○ | Examples of Present embodiment |
| 16d | 0.03 | 0.20 | 0.15 | 0.03 | 0.20 | 0.15 | 1.00 | Protruding shape | 1 | 1676 | 12.7 | ○ | |
| 17d | 0.03 | 0.20 | 0.15 | 0.03 | 0.20 | 0.15 | 1.00 | Protruding shape | 3 | 1673 | 12.8 | ○ | |
| 18d | 0.03 | 0.20 | 0.15 | 0.03 | 0.20 | 0.15 | 1.00 | Protruding shape | 5 | 1675 | 12.7 | ○ | |
| 19d | 0.03 | 0.20 | 0.15 | 0.03 | 0.20 | 0.15 | 1.00 | Protruding shape | 7 | 1678 | 12.6 | ○ | |
| 20d | 0.03 | 0.20 | 0.15 | 0.03 | 0.20 | 0.15 | 1.00 | Protruding shape | 10 | 1683 | 12.3 | ○ | |
| 21d | 0.03 | 0.20 | 0.15 | 0.03 | 0.20 | 0.15 | 1.00 | Protruding shape | 12 | 1688 | 12.0 | ○ | |
| 10b | 0.20 | 0.20 | 1.00 | 0.20 | 0.20 | 1.00 | 1.00 | Flat | - | 1919 | - | ✕ | Comparative Examples |
| 11b | 0.03 | 0.03 | 1.00 | 0.03 | 0.03 | 1.00 | 1.00 | Flat | - | 1900 | | ✕ | |

The following became clear from the results of conducting Cutting Test Example 4 shown in Table 4. That is, in view of comparison among the sample numbers 1b, and 16d to 21d which are the examples of the present embodiment cutting resistance was reduced more in the sample numbers 16d to 20d in which the width of the negative honing and the width of the land were equal to each other and the value a was in the range of $0° < a \leq 10°$ as compared to the sample numbers 1b and 21d in which the value a was not in the range of $0° < a \leq 10°$.

Therefore, it can be said that the provision of the above-described protruding-shaped cutting tip (cutting tip whose cutting tip shape is a protruding shape) on the side of the short side 23a is effective for the reduction in cutting resistance.

Moreover, when the value a was 3°, cutting resistance was most reduced. In contrast, when the value a was increased to 12° as in the sample number 21d, the cutting resistance was increased more than the sample number 1b. Thus, it can be said that the value a is preferably set to be in the range of $0° < a \leq 10°$.

Although the above-described indexable milling cutter according to the second embodiment has been described taking, as an example, a case where the main cutting edge 26 of the insert 21 makes a 3/8 circular arc, the circular arc shape is not limited to a 3/8 circular arc. For example, even when the main cutting edge 26 has a 1/4 circular arc shape or a circular arc shape which is greater than a 1/4 circular arc and less than a 3/8 circular arc, the above-described effects can be obtained as the indexable milling cutter according to the above-described second embodiment.

Third Embodiment (not part of the invention)

An embodiment according to the third embodiment will now be described. Characteristics of an indexable milling cutter according to the third embodiment are as follows.

That is, this indexable milling cutter is an indexable milling cutter including an insert attached thereto which can be attached to and detached from a cutter body and which has a generally circular plate shape (round shape) as seen in a plan view, having characteristics such that:

a side surface of the insert is used as a flank face across an entire circumference thereof; a plurality of rake faces are provided along an outer peripheral portion of an upper surface of the insert; and a ridge line portion between the flank face and the rake face is used as a cutting edge;
when the insert is attached to the cutter body,
the cutting edge has a lowermost point in the cutter body, a main cutting edge in an outer periphery side direction of the cutter body and a minor cutting edge on an inner periphery side of the cutter body with the lowermost point interposed therebetween; a connecting portion where the main cutting edge and the minor cutting edge are adjacent to each other is provided on an outer periphery side of the cutter body; and a negative honing, a land, and a breaker groove are formed on the rake face of the main cutting edge; and
a width of the negative honing gradually increases toward the outer periphery side from the lowermost point to the connecting portion.

Moreover, in the third embodiment, a width of the land gradually increases toward the outer periphery side from the lowermost point to the connecting portion.

Moreover, in the third embodiment,

$$0.03 \text{ mm} \leq H1 \leq 0.10 \text{ mm}, 0.15 \leq H1/H2 \leq 0.50,$$

$$0.03 \text{ mm} \leq F1 \leq 0.10 \text{ mm}, 0.15 \leq F1/F2 \leq 0.50,$$

are satisfied, where H1 denotes the width of the negative honing and F1 denotes the width of the land at the lowermost point, and H2 denotes the width of the negative honing and F2 denotes the width of the land at the connecting portion.

Moreover, in the third embodiment, an angle $\alpha$ of the negative honing is $5° \leq \alpha \leq 30°$, and the angle $\alpha$ of the negative honing gradually decreases from the lowermost point to the connecting portion.

Moreover, in the third embodiment, a central angle $\underline{b}$ of the minor cutting edge is $b \geq 1°$.

A third embodiment of the indexable milling cutter having the above-described characteristics will be described below with reference to the drawings.

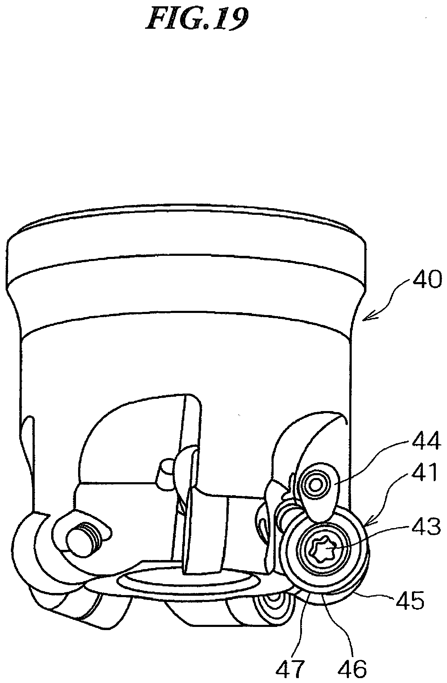

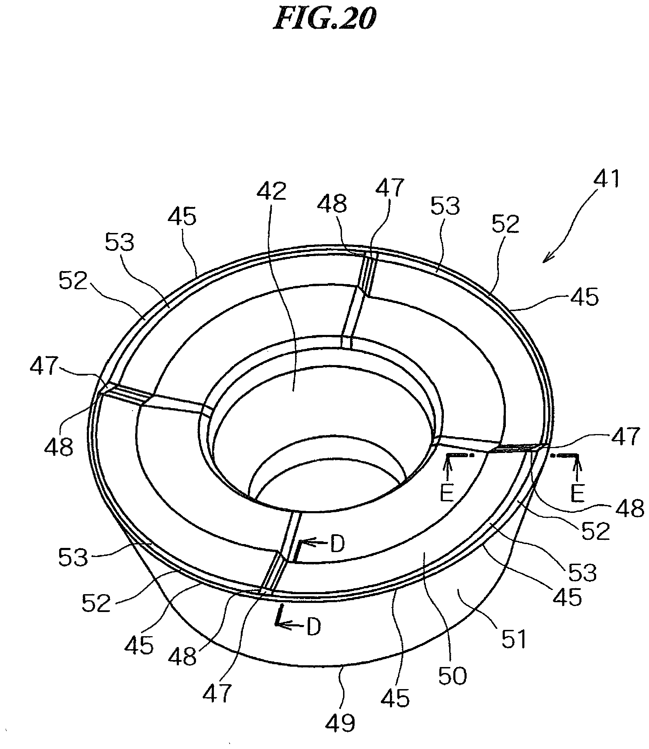

The third embodiment is an indexable milling cutter in which an insert having a circular plate shape is attached to a cutter body and is to achieve a reduction in cutting resistance while maintaining the chipping resistance of a main cutting edge. Fig. 19 is a diagram showing an example of a third embodiment of the indexable milling cutter, and Fig. 20 is a diagram showing an embodiment of an insert to be attached to the indexable milling cutter.

As shown in Figs. 19 and 20, in the indexable milling cutter according to the third embodiment, the shape of the insert to be attached to the cutter body is a round shape which has a circular plate shape (or generally circular plate shape); a flank face is provided across the entire circumference of a side surface of the insert; a plurality of rake faces are provided along an outer periphery of an upper surface of the insert; and a ridge line portion between the flank face and the rake face is used as a cutting edge. When the insert is attached to the cutter body, the cutting edge of the insert has a lowermost point of the cutter body.

A main cutting edge is positioned in an outward direction with respect to the rotation axis of the cutter body with the lowermost point interposed therebetween, and a minor cutting edge is positioned on an inner side with respect to the rotation axis of the cutter body with the lowermost point interposed therebetween. A connecting portion between the main cutting edge and the minor cutting edge is formed on an outer periphery side of the main cutting edge.

A negative honing, a land, and a breaker groove are provided on the rake face of the main cutting edge, and a width of the negative honing gradually increases toward the outer periphery side (outer periphery side of the cutter body) from the lowermost point to the connecting portion. The indexable milling cutter according to the third embodiment makes it possible to reduce cutting resistance while maintaining the chipping resistance by attaching thereto the insert having the above-described characteristics.

As shown in Fig. 19, an insert 41 having a circular plate shape as seen in a plan view is attached to a cutter body 40 through an attachment hole 42 provided at a center portion of the insert 41 by means of a clamp screw 43 and a clamp piece 44. When attaching the insert 41 to the cutter body 40, the attachment is performed so that a main cutting edge 45 of the insert 41 has a lowermost point 46 of the cutter body 40 (indexable milling cutter).

Moreover, the insert 41 is attached to the cutter body 40 so that the main cutting edge 45 of the insert 41 is positioned on the outer side with respect to the tool rotation axis of the cutter body 40 and a minor cutting edge 47 of the insert 41 is positioned on the inner side with respect to the tool rotation axis of the cutter body 40 with the lowermost point 46 interposed therebetween.

Furthermore, a connecting portion 48 between the main cutting edge 45 and the minor cutting edge 47 is formed on the outer periphery side of the main cutting edge 45. Here, the connecting portion 48 represents a connecting portion from the main cutting edge 45 to the minor cutting edge 47.

Fig. 20 shows a perspective view of the insert 41 shown in Fig. 19. As shown in Fig. 20, the insert 41 has a circular plate shape or a generally circular plate shape as seen in a plan view, and includes a lower surface 49 to be in contact with a seating surface of the cutter body 40, a rake face to be an upper surface 50 opposing the lower surface 49, and a flank face to be a side surface 51 formed between the lower surface 49 and the upper surface 50.

The main cutting edge 45 is formed in a circumferential ridge line portion between the rake face 50 and the flank face 51. The insert 41 further includes the attachment hole 42 provided at the center portion thereof. Here, the "generally circular plate shape" described above represents that when the insert 41 is seen from the above (seen in a plan view), the outer peripheral shape thereof is a circular shape.

Moreover, the insert 41 also includes a case where a protruding and depressed shape due to a breaker groove, or the like are present on the upper surface of the insert 41 or a case where a flat surface for preventing turns, or the like, is present on the side surface or the lower surface thereof when the insert 41 is attached to the cutter body 40.

The insert 41 shown in Fig. 20 includes the flank face 51 across the entire circumference of the side surface of the insert 41, and includes the rake faces 50 obtained by equally dividing the upper surface to be the rake faces 50 into four along the outer periphery thereof.

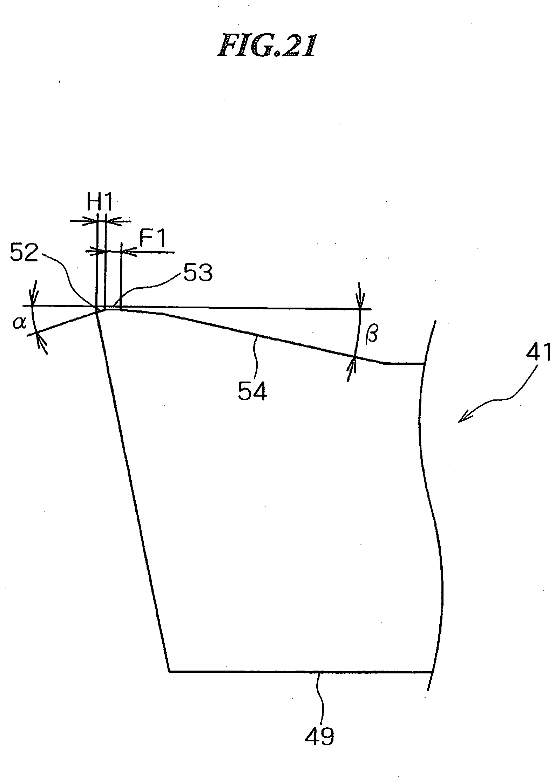

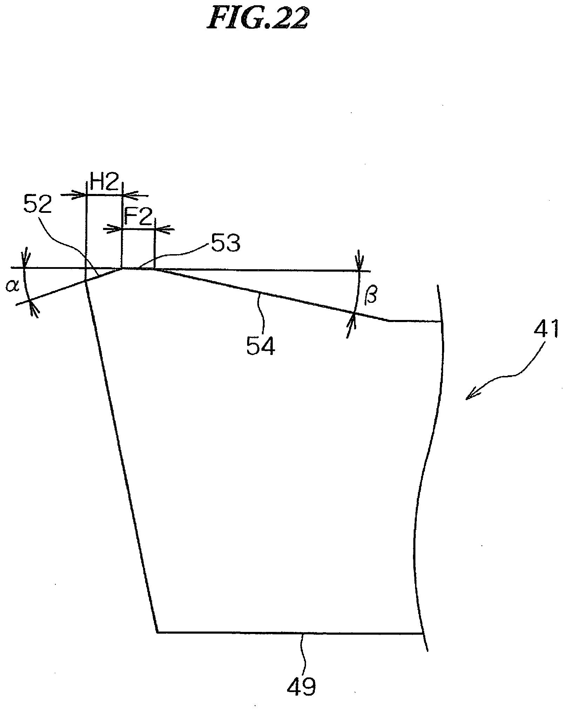

The insert 41 uses the ridge line portion between the flank face 51 and the rake face 50 as a cutting edge, and there is shown an example including four sets of cutting edges wherein one set of cutting edges is composed of the main cutting edge 45 and the minor cutting edge 47. Moreover, a negative honing 52, a land 53, and a breaker groove 54 (see Figs. 21 and 22) are provided on the rake face 50 of the main cutting edge 45 of the insert 41.

As described above, when the insert 41 is attached to the cutter body 40, the insert 41 has the lowermost point of the cutter body 40, and has the main cutting edge 45 on the outer periphery side with respect to the rotation axis of the cutter body 40 and the minor cutting edge 47 on the inner periphery side with respect to the rotation axis with the lowermost point 46 interposed therebetween.

The connecting portion 48 described above is a portion where the main cutting edge 45 and the minor cutting edge 47 are adjacent to each other. The minor cutting edge 47 is present between one main cutting edge 45 and the next adjacent main cutting edge 45. The minor cutting edge 47 is also a portion transitioning from a portion of the main cutting edge 45 in which the negative honing 52 and the land 53 have large widths, through the connecting portion 48, to a portion of the next adjacent main cutting edge 45 in which the negative honing 52 and the land 53 have small widths.

When the insert 41 described above is attached to the cutter body 40, the width of the negative honing 52 is formed so as to gradually increase toward the outer periphery side of the cutter body 40 from the lowermost point 46 to the connecting portion 48. As with the width of the negative honing 52, the width of the land 53 is also preferably formed so as to gradually increase toward the outer periphery side of the cutter body 40 from the lowermost point 46 to the connecting portion 48.

Note that the phrase, "to gradually increase," represents either a case of continuously increasing from the lowermost point 46 toward the connecting portion 48 or a case where the width is not continuously increased, i.e., the width is not partially increased so as to include a portion of a constant width.

Fig. 21 is a cross-sectional view of the insert 41 shown in Fig. 20 taken along line D-D near the lowermost point 46 of the cutter body 40, and shows that H1 denotes the width of the negative honing 52 and F1 denotes the width of the land 53. Fig. 22 is a cross-sectional view of the insert 41 shown in Fig. 20 taken along line E-E near the connecting portion 48 between the main cutting edge 45 and the minor cutting edge 47, and shows that H2 denotes the width of the negative honing 52 and F2 denotes the width of the land 53.

As shown in Figs. 20, 21, and 22, the indexable milling cutter according to the third embodiment of the present application includes the negative honing 52 and the land 53 provided on the side of the rake face 50 of the main cutting edge 45 so as to increase the cutting edge strength. Thus, the chipping resistance of the main cutting edge 45 is improved, and an improvement in chipping resistance particularly near the minor cutting edge 47 is achieved.

However, as described above, if the width of the negative honing 52 is large, the chipping resistance is improved, but the cutting resistance is increased, thereby increasing a load on a machine tool used for cutting, e.g., a machine tool such as a machining center. Thus, it is impossible to perform highly efficient cutting process.

In an indexable milling cutter having a long overhang such that the value of (L/D1) is 4 or more where the value L (mm) denotes a overhang and the value D1 (mm) denotes a tool diameter, chattering vibration becomes large, resulting in a state in which the chipping of the cutting edge is likely to occur. The processed surface roughness of the workpiece is also deteriorated.

In contrast, if the width of the negative honing 52 is small, the cutting resistance is reduced, but the cutting edge strength is not sufficiently increased. Thus, the chipping of the cutting edge is likely to occur. Therefore, the width of the negative honing 52 is set as follows. When the rigidity of a workpiece is small or for an indexable milling cutter having the (L/D1) value of 4 or more with which chattering vibration, or the like, is likely to occur during cutting, the width of the negative honing 52 is set to be small.

In contrast, when the chipping of the cutting edge is likely to occur due to heavy interrupted cutting, the width of the negative honing 52 is set to be large.

Similarly, if the width of the land 53 is large, the chipping resistance is improved. On the other hand, however, the cutting resistance is increased, thereby increasing a load on a machine tool used for cutting. Thus, it becomes impossible to perform highly efficient cutting process. In contrast, if the width of the land 53 is small, the cutting resistance is reduced, but the cutting edge strength is not sufficiently increased. Thus, the chipping of the cutting edge is likely to occur.

Therefore, the width of the land 53 is set as follows. In a case where the rigidity of a workpiece is small and chattering vibration, or the like, is therefore likely to occur during cutting, or for an indexable milling cutter having a value of (L/D1) which is 4 or more, the width of the land 53 is set to be small. In contrast, when the chipping of the cutting edge is likely to occur due to heavy interrupted cutting, the width of the land 53 is set to be large.

Moreover, by providing the breaker groove 54 on the rake face 50, it is possible to reduce the cutting resistance. The rake angle $\beta$ (degrees) of the breaker groove 54 is preferably set to be $\beta \le 20°$, and more preferably, $10° \le \beta \le 20°$.

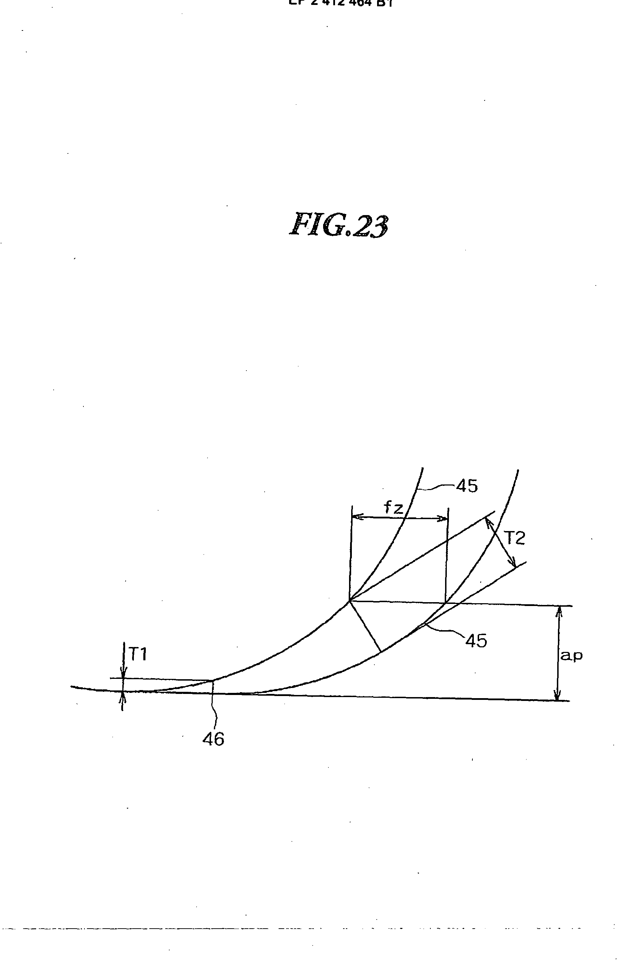

Fig. 23 is a schematic diagram for illustrating the thickness of a chip depending on portions of the main cutting edge 45 of the insert 41. In Fig. 23, the thickness of a chip produced by the circular arc-shaped main cutting edge 45 is not constant over the entire main cutting edge 45 in the length direction thereof.

For example, when the radius R of the main cutting edge 45 is 8 mm, a chip thickness T2 is approximately 0.28 mm and a chip thickness T1 near the lowermost point 46 is approximately 0.02 mm if processing is performed under such cutting process cutting conditions that the value ap, which is a cutting depth, is 1.5 mm, and fz, which is a feed per tooth, is 0.5 mm. That is, the value T1 becomes approximately 1/14 of the value T2.

Thus, in the indexable milling cutter according to the third embodiment, it is possible to realize an indexable milling cutter capable of reducing the cutting resistance and simultaneously improving the chipping resistance by respectively setting appropriate widths of the negative honing 52 depending on the portions of the cutting edge, i.e., the portion at or near the connecting portion 48 where the chip thickness becomes relatively thicker, and the portion near the lowermost point 46 where the chip thickness becomes relatively the thinnest.

As described above, in order to reduce cutting resistance, it is important to set the value H1 at or near the lowermost point 46 at which the chip thickness is to be small. Here, even if the value H1 is set to be small, the chip thickness is still thin. Thus, the chipping resistance is not significantly deteriorated.

On the other hand, in the portion on the outer periphery side at or near the connecting portion 48 at which the chip thickness reaches its maximum, it is required to improve the chipping resistance by increasing the width of the negative honing 52. Here, the chipping resistance on the outer periphery side of the main cutting edge 45 of the insert 41 at or near the connecting portion 48 is improved placing a priority thereon.

Note that the following description will be made while H1 denotes the width H of the negative honing 52 and F1 denotes the width F of the land 53 at or near the lowermost point 46 when the insert 41 is attached to the cutter body 40. The lowermost point 46 or the vicinity of the lowermost point 46 is sometimes stated as the "lowermost point 46." In such a case, the "lowermost point 46" represents the lowermost point 46 or the vicinity thereof.

Similarly, a description will be made while H2 denotes the width H of the negative honing 52 and F2 denotes the width F of the land 53 at or near the connecting portion 48. In the following description, the connecting portion 48 or the vicinity of the connecting portion 48 is sometimes stated as the "connecting portion 48." In such a case, the "connecting portion 48" represents the connecting portion 48 or the vicinity thereof.

Effects similar to those of the above-described value H1 representing the width of the negative honing 52 can be obtained also by the value F1 which is the width of the land 53. Thus, it is preferable to set an appropriate width of the land 53 depending on a portion of the cutting edge.

When the insert 41 is attached to the cutter body 40, the width of the negative honing 52 is gradually increased from the lowermost point 46 toward the connecting portion 48, thereby making it possible to achieve the chipping resistance of the main cutting edge 45 and a reduction in cutting resistance. Moreover, it is also desirable to gradually increase the width of the land 53 from the lowermost point 46 toward the connecting portion 48.

Furthermore, it is preferable to gradually increase the width of the negative honing 52 and the width of the land 53 from the lowermost point 46 toward the connecting portion 48 while the value H1 and the value F1 at the lowermost point 46 of the cutter body 40 are minimum values, and the value H2 and the value F2 at the connecting portion 48 between the main cutting edge 45 and the minor cutting edge 47 are maximum values.

In contrast, in the insert of a conventional indexable milling cutter, the negative honing is set to have a constant width, and the width of the land is also set to be a constant width. Therefore, as described above, cutting is performed within the negative honing at the lowermost point of the cutter body. Thus, the cutting quality is deteriorated, and large cutting resistance is therefore generated.

In the insert 41 used for the indexable milling cutter according to the third embodiment, the width of the negative honing 52 and the width of the land 53 described above are preferably set as follows.

First, the value H1 (mm) of the main cutting edge 45 is preferably $0.03 \le H1 \le 0.10$. The reason for this is as follows. When the value Fz during process and the chip thickness near the lowermost point 46 of the cutter body 40 are calculated and the value H1 is set based on the calculated values, if the value H1 is less than 0.03 mm, chipping resistance is significantly lowered.

Rather than the influence of the chip thickness, this is resulted from a lack in the cutting edge strength which leads to the occurrence of chipping due to an impact generated when the lowermost point 46 comes into contact with a workpiece during cutting. In contrast, if the value H1 is greater than 0.10 mm, the cutting resistance is increased, resulting in a problem.

Next, after setting the value H1, the value H2 (mm) is preferably set so that the value of H1/H2, which is the ratio between the value H1 and the value H2, is 0.15 to 0.50. Then, there is obtained the best balance between the chipping resistance of the main cutting edge 45 and the cutting resistance, and it is possible to reduce cutting resistance by 10 % or more without deteriorating the chipping resistance.

Note however that the value H2 is preferably set within the range of 0.1 mm to 0.50 mm in view of the chipping resistance of the cutting edge and an increase in cutting resistance. Thus, even when the value H1 is set to be a width about 30 % larger than the chip thickness T1 near the lowermost point 46, the range in which cutting is performed within the width of the negative honing 52 is small. Thus, it is possible to reduce cutting resistance by 10 % or more.

In the insert 41, the value F1 (mm) of the main cutting edge 45 is preferably set to be $0.03 \text{ mm} \le F1 \le 0.10$ mm. This is because the value F1 of less than 0.03 mm cannot effectively increase the hardness of the cutting edge and chipping resistance is thereby reduced.

If cutting edge strength lacks, chipping occurs by an impact generated when the lowermost point 46 comes into contact with a workpiece during cutting. In contrast, if the value F1 is greater than 0.10 mm, there is created a problem of an increase in cutting resistance.

Next, after setting the value F1, the value F2 (mm) is preferably set so that the value of F1/F2 is 0.15 to 0.50. Thus, there is obtained an advantageous effect of delaying the progress of wear on the rake face 50 of the main cutting edge 45. As the value F2 becomes larger, there is obtained a greater effect of delaying wear on the rake face 50, especially on the outer periphery side at or near the connecting portion 48, thereby improving the chipping resistance.

Note however that the value F2 is preferably set within the range of 0.1 to 0.5 mm in view of the chipping resistance of the cutting edge and an increase in cutting resistance. When the value F2 is excessively large, the removal ability of chips is lowered, thereby increasing the cutting resistance. This is because there is created a problem of hindering the flow which guides chips to the breaker groove 54.

As approaching to the vicinity of the connecting portion 48 which is the outer periphery side of the cutter body 40, a load on the main cutting edge 45 becomes larger. Therefore, cutting edge strength is improved by setting the value H2 to be greater than the value H1 as described above.

Particularly, as an insert suitable for use in cutting process using an indexable milling cutter such that the value of (L/D1) is 4 or more, it is preferable to achieve a reduction in cutting resistance.

The angle $\alpha$ (degrees) of the negative honing 52 is preferably set to be $5 \le \alpha \le 30$, and it is preferred that the value α is continuously decreased or gradually decreased toward the outer periphery side from the lowermost point 46 to the connecting portion 48. As the value α is decreased toward the outer periphery side of the main cutting edge 45, a reduction in cutting resistance on the outer periphery side can be more effectively obtained.

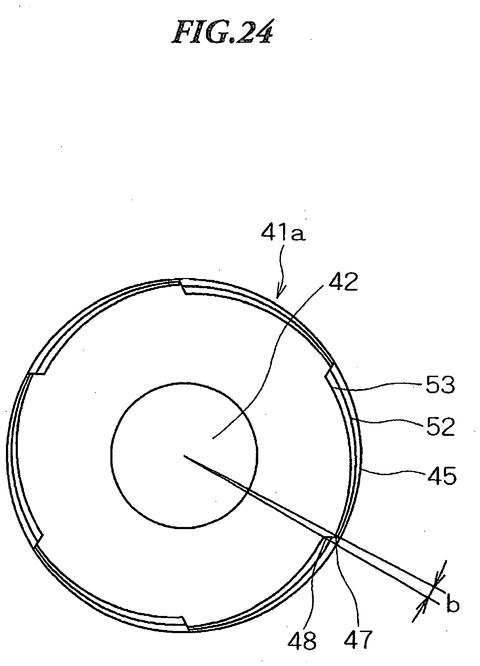

The central angle b (degrees) of the minor cutting edge 47 shown in Fig. 24 is preferably at least b ≥ 1°. If the central angle b is less than 1°, a range in which large widths of the negative honing 52 and the land 53 of the main cutting edge 45 are transitioned, through the connecting portion 48, to a portion of the next adjacent main cutting edge 45 in which the negative honing 52 and the land 53 have small widths is small.

Thus, due to such an abrupt dimensional change, the chipping resistance of the cutting edge is deteriorated. This is also because there is created a problem that the cutting resistance at the lowermost point 46 of the cutter body 40 is increased.

More preferably, the central angle b is set to be 1° or more and 5° or less. This is because there is created a problem that the length of the main cutting edge 45 becomes short if the value b is greater than 5°.

On the side surface of the insert 41 shown in Fig. 20, it is preferable to provide an attachment seat (not shown) to be surface-jointed to an attachment portion for the insert 41 which is formed in the cutter body 40. A flat surface (not shown) provided in this attachment seat becomes a constrained surface when the insert 41 is attached to the cutter body 40, and is effective for preventing turns of the insert 41.

By forming, on the upper surface or the lower surface of the insert 41, a protruding anchor or a depressed groove (neither is shown) for positioning, there is obtained an effect of facilitating the identification of an unused cutting edge and the positioning thereof when the insert 41 is used by turning the insert 41 about the attachment hole 42.

It is preferable to employ an insert wherein the shape thereof is a circular shape or a generally circular shape as seen in a plan view; the size of the circular plate-shaped insert 41 is such that the diameter of the insert 41 is 5 mm to 20 mm; and the number of partitions of the main cutting edge 45 along the outer periphery of the upper surface of the insert 41 is 4 equal partitions, 6 equal partitions, or 8 equal partitions.

Fig. 24 shows a second embodiment of the circular plate-shaped insert to be attached to the indexable milling cutter according to the third embodiment. The insert representing the second embodiment is an insert 41a in which the number of partitions of the main cutting edge 45 along the outer periphery of the upper surface thereof is 6.

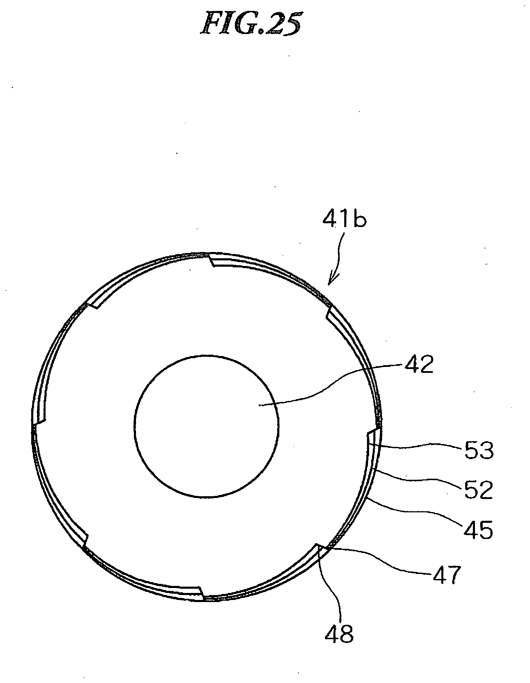

Fig. 25 shows a third embodiment of the insert, and shows an insert 41b in which the number of partitions of the main cutting edge 45 along the outer periphery of the upper surface thereof is 8. The indexable milling cutters having these inserts 41a and 41b attached thereto can obtain particularly advantageous effects as compared to a conventional insert as described above.

Cutting Test Example 5

Cutting test example 5 (hereinafter, referred to as "Cutting Test Example 5") will now be described wherein an indexable milling cutter which is the third embodiment of the third embodiment was experimentally produced, and a cutting test therewith was conducted.

In Cutting Test Example 5, the cutting test was conducted using a single edge such that a circular plate-shaped insert was attached to the indexable milling cutter of the above-described third embodiment, and the cutting resistance value was measured and evaluated. Note that as inserts for being attached to the cutter body, 26 kinds of inserts with the sample numbers 1e to 26e shown in Table 5 were produced.

By using a powder metallurgy technique, there were produced circular plate-shaped, WC-based cemented carbide inserts each having a thickness of 2.38 mm. Concerning the diameter D1 of the cutter body to which the produced insert is attached, a cutter body having a diameter D1 shown in Table 5 for each of the sample numbers 1e to 26e was used.

Note that a diameter D2, the above-described H1, H2, H1/H2, F1, F2, F 1/F2, and the number of partitions of a main cutting edge of the produced insert for each of the sample numbers are as shown in Table 5. Moreover, as shown in Table 5, as the inserts of the sample numbers 1e to 10e and the sample numbers 15e to 20e, there were produced inserts as the examples of the present embodiment wherein the widths of the honing and the land were continuously increased toward the outer periphery side from the above-described lowermost point to the connecting portion, and

$$0.03 \text{ mm} \leq H1 \leq 0.10 \text{ mm}, \ 0.15 \leq H1/H2 \leq 0.50,$$

$$0.03 \text{ mm} \leq F1 \leq 0.10 \text{ mm}, \ 0.15 \leq F1/F2 \leq 0.50,$$

described above were satisfied.

The provision of the negative honing, the land, and the breaker groove in the produced insert was performed during the settings of the shape of a press die. Using a die press machine, the insert body was molded. Moreover, by changing the settings of the shape of the molding die, there were produced inserts whose shapes in the width of the negative honing and the width of the land were varied. In each of the produced inserts, the value α, which is an angle of the negative honing, was 20° and the value β, which is a rake angle of the breaker groove, was 12°.

Furthermore, the value b, which is a central angle of the minor cutting edge, was in the range of 1° to 3°. Note that in each of the inserts with the sample numbers 11e to 14e and 21e to 26e which are conventional examples, the width of the negative honing was constant over the entire main cutting edge as shown in Table 5.

In Cutting Test Example 5, in order to confirm a reduction in cutting resistance and the effect of chipping resistance in the indexable milling cutter of the third embodiment, evaluation was made by using cutting conditions for cutting tests shown below. As shown in Table 5, among the test (evaluation) conditions, the value ap, which is an axial cutting amount, and the value ae, which is a radial cutting amount, and the value of (L/D1) for each of the sample numbers are as shown in Table 5.

<div align="center">Cutting conditions</div>

| | |
|---|---|
| Processing method: | planar cutting process, dry cutting process |
| Workpiece: | S50C having a plurality of holes formed therein, each having a diameter of 6 mm (a workpiece 60 shown in Fig. 26) |
| Cutting velocity Vc: | 180 m/min |
| Feed per tooth fz: | 0.5 mm/tooth |

Table 5

| Sample Number | Tool shape | | | | | | | | | | | Evaluation conditions | | Evaluation results | | | Remarks |
|---|---|---|---|---|---|---|---|---|---|---|---|---|---|---|---|---|---|
| | Tool diameter D1 (mm) | Insert diameter D2 (mm) | Honing·Land widths | H1 (mm) | H2 (mm) | H1/H2 | F1 (mm) | F2 (mm) | F1/F2 | Number of partitions (number) | L/D1 | Axial cutting amount ap value (mm) | Radial cutting amount ae value (mm) | Cutting resistance value (N) | Rate of reduction in cutting resistance (%) | Chipping resistance | |
| 1e | 20 | 8 | Continuously increased | 0.03 | 0.10 | 0.30 | 0.03 | 0.10 | 0.30 | 4 | 4.0 | 1.0 | 12 | 1205 | 17.5 | ○ | Examples of Present embodiment |
| 2e | 25 | 10 | Continuously increased | 0.03 | 0.10 | 0.30 | 0.03 | 0.10 | 0.30 | 6 | 4.0 | 1.0 | 15 | 1380 | 11.2 | ○ | |
| 3e | 32 | 10 | Continuously increased | 0.03 | 0.10 | 0.30 | 0.03 | 0.10 | 0.30 | 6 | 4.0 | 1.0 | 20 | 1403 | 11.5 | ○ | |
| 4e | 40 | 12 | Continuously increased | 0.03 | 0.15 | 0.20 | 0.03 | 0.15 | 0.20 | 6 | 4.0 | 1.0 | 25 | 1642 | 12.8 | ○ | |
| 5e | 50 | 12 | Continuously increased | 0.03 | 0.15 | 0.20 | 0.03 | 0.15 | 0.20 | 6 | 4.0 | 1.0 | 35 | 1670 | 12.3 | ○ | |
| 6e | 63 | 16 | Continuously increased | 0.03 | 0.20 | 0.15 | 0.03 | 0.15 | 0.20 | 8 | 4.0 | 1.2 | 40 | 1853 | 17.6 | ○ | |
| 7e | 80 | 16 | Continuously increased | 0.03 | 0.20 | 0.15 | 0.03 | 0.15 | 0.20 | 8 | 4.0 | 1.2 | 50 | 1881 | 11.7 | ○ | |
| 8e | 100 | 16 | Continuously increased | 0.03 | 0.20 | 0.15 | 0.03 | 0.15 | 0.20 | 8 | 4.0 | 1.5 | 60 | 2337 | 13.1 | ○ | |
| 9e | 125 | 16 | Continuously increased | 0.03 | 0.20 | 0.15 | 0.03 | 0.15 | 0.20 | 8 | 4.0 | 1.5 | 80 | 2477 | 14.4 | ○ | |
| 10e | 160 | 20 | Continuously increased | 0.05 | 0.20 | 0.25 | 0.03 | 0.10 | 0.30 | 8 | 4.0 | 2.0 | 100 | 2920 | 13.4 | ○ | |

| Sample Number | Tool diameter D1 (mm) | Insert diameter D2 (mm) | Honing·Land widths | H1 (mm) | H2 (mm) | H1/H2 | F1 (mm) | F2 (mm) | F1/F2 | Number of partitions (number) | L/D1 | Axial cutting amount ap value (mm) | Radial cutting amount ae value (mm) | Cutting resistance value (N) | Rate of reduction in cutting resistance (%) | Chipping resistance | |
|---|---|---|---|---|---|---|---|---|---|---|---|---|---|---|---|---|---|
| 11e | 20 | 8 | Constant width | 0.10 | 0.10 | 1.00 | 0.05 | 0.05 | 1.00 | None | 4.0 | 1.0 | 12 | 1460 | - | ○ | Conventional Examples |
| 12e | 40 | 12 | Constant width | 0.15 | 0.15 | 1.00 | 0.10 | 0.10 | 1.00 | None | 4.0 | 1.0 | 25 | 1884 | - | ○ | |
| 13e | 63 | 16 | Constant width | 0.15 | 0.15 | 1.00 | 0.10 | 0.10 | 1.00 | None | 4.0 | 1.2 | 40 | 2250 | - | ○ | |
| 14e | 160 | 20 | Constant width | 0.20 | 0.20 | 1.00 | 0.10 | 0.10 | 1.00 | None | 4.0 | 2.0 | 100 | 3370 | - | ○ | |
| 21e | 25 | 10 | Constant width | 0.10 | 0.10 | 1.00 | 0.05 | 0.05 | 1.00 | None | 4.0 | 1.0 | 15 | 1554 | - | ○ | |
| 22e | 32 | 10 | Constant width | 0.10 | 0.10 | 1.00 | 0.05 | 0.05 | 1.00 | None | 4.0 | 1.0 | 20 | 1585 | - | ○ | |
| 23e | 50 | 12 | Constant width | 0.15 | 0.15 | 1.00 | 0.10 | 0.10 | 1.00 | None | 4.0 | 1.0 | 35 | 1905 | - | ○ | |
| 24e | 80 | 16 | Constant width | 0.15 | 0.15 | 1.00 | 0.10 | 0.10 | 1.00 | None | 4.0 | 1.2 | 50 | 2130 | - | ○ | |
| 25e | 100 | 16 | Constant width | 0.15 | 0.15 | 1.00 | 0.10 | 0.10 | 1.00 | None | 4.0 | 1.5 | 60 | 2690 | - | ○ | |
| 26e | 125 | 16 | Constant width | 0.15 | 0.15 | 1.00 | 0.10 | 0.10 | 1.00 | None | 4.0 | 1.5 | 80 | 2894 | - | ○ | |

(continued)

| Sample Number | Tool diameter D1 (mm) | Insert diameter D2 (mm) | Honing-Land widths | H1 (mm) | H2 (mm) | H1/H2 | F1 (mm) | F2 (mm) | F1/F2 | Number of partitions (number) | UD1 | Axial cutting amount ap value (mm) | Radial cutting amount ae value (mm) | Cutting resistance value (N) | Rate of reduction in cutting resistance (%) | Chipping resistance | |
|---|---|---|---|---|---|---|---|---|---|---|---|---|---|---|---|---|---|
| 15e | 63 | 16 | Continuously increased | 0.03 | 0.20 | 0.15 | 0.03 | 0.03 | 1.00 | 8 | 4.0 | 1.2 | 40 | 1840 | 18.2 | ○ | Examples of Present embodiment |
| 16e | 63 | 16 | Continuously increased | 0.06 | 0.20 | 0.30 | 0.06 | 0.06 | 1.00 | 8 | 4.0 | 1.2 | 40 | 1995 | 11.1 | ○ | |
| 17e | 63 | 16 | Continuously increased | 0.10 | 0.20 | 0.50 | 0.03 | 0.15 | 0.20 | 8 | 4.0 | 1.2 | 40 | 2025 | 10.0 | ○ | |
| 18e | 63 | 16 | Continuously increased | 0.03 | 0.20 | 0.15 | 0.03 | 0.20 | 0.15 | 8 | 4.0 | 1.2 | 40 | 1880 | 16.4 | ○ | |
| 19e | 63 | 16 | Continuously increased | 0.03 | 0.20 | 0.15 | 0.06 | 0.20 | 0.30 | 8 | 4.0 | 1.2 | 40 | 1905 | 15.3 | ○ | |
| 20e | 63 | 16 | Continuously increased | 0.03 | 0.20 | 0.15 | 0.10 | 0.20 | 0.50 | 8 | 4.0 | 1.2 | 40 | 1965 | 12.7 | ○ | |

41

In the evaluation of cutting resistance, the S50C material having a flat processed surface was used as a workpiece, cutting process was performed for ten minutes, and the cutting resistance value was measured. It was determined to be "effective" for a reduction in cutting resistance if a 10 % or more reduction in the cutting resistance value was obtained as compared to the corresponding one of the sample numbers 11e to 14e and 21e to 26e which are the conventional examples having the same tool diameter and the same insert diameter.

Next, as shown in Fig. 26, the S50C material including a plurality of holes each having a diameter of 6 mm was used as a workpiece, and planar cutting process by heavy interrupted cutting was performed for 30 minutes. Then, the evaluation for chipping resistance was made.

In the tests for evaluating chipping resistance, five inserts were used for each of the sample numbers 1e to 26e, and cutting was performed for 50 minutes for each of the tests for evaluating chipping resistance using a single edge such that one insert was attached to the cutter body. The tests for evaluating chipping resistance were conducted sequentially for all of these five inserts.

According to the basis of the evaluation for chipping resistance, if the occurrence of chipping in a cutting edge was not observed in all of the five inserts during the processing for the predetermined cutting time (50 minutes), the "○" mark was denoted. If chipping occurred in at least one of the five inserts, the "×" mark was denoted. The results of the evaluation for chipping resistance are shown in the section of the evaluation for chipping resistance in Table 5.

The following became clear from the evaluation results for cutting resistance and chipping resistance shown in Table 5. According to the cutting tests in which cutting resistances were measured, in a case where the indexable milling cutter with the insert of the sample number 1e attached thereto was used to perform cutting process with a fz value of 0.5 mm/tooth for ten minutes, the width H1 of the negative honing in the insert of the sample number 1e was continuously increased from 0.03 mm and the value F1 was simultaneously continuously increased from 0.03 mm toward the outer periphery of the indexable milling cutter.

As a result, the measured value of the cutting resistance was 1205 N. As compared to this value, the cutting resistance value obtained at a point in time when cutting was performed for ten minutes while being attached the insert of the sample number 11e, which is a conventional example having the same tool diameter and the same insert diameter, was 1460 N.

Therefore, when the insert of the sample number 1e which is an example of the present embodiment was attached, a 17.5 % reduction in cutting resistance was achieved. As similar comparisons for the effectiveness of a reduction in cutting resistance, since the sample number 12e which is a conventional example had 1884 N as compared to 1642 N in the sample number 4e, the sample number 4e which is an example of the present embodiment could obtain an effect of a 12.8 % reduction in cutting resistance.

Since the sample number 13e which is a conventional example had 2250 N as compared to 1853 N in the sample number 6e, the sample number 6e which is an example of the present embodiment could obtain an effect of a 17.6 % reduction in cutting resistance. Moreover, since the sample number 14e which is a conventional example had 3370 N as compared to 2920 N in the sample number 10e which is an example of the present embodiment, the sample number 10e could obtain an effect of a 13.4 % reduction in cutting resistance.

As described above, in any of the comparisons about cutting resistance values between the sample numbers 1e to 10e which are the examples and the sample numbers 11e to 14e which are the conventional examples shown in Table 5, the sample numbers 1e to 10e achieved a 10 % or more reduction in cutting resistance. Moreover, the sample numbers 1e to 10e could perform processing without causing chattering vibration despite the condition of the examples under which the value of is "4", i.e., long.

Thus, it became clear that each of the indexable milling cutters of the third embodiment having the inserts of the sample numbers 1e to 10e attached thereto can perform processing with a further increased cutting feed since the achievement of a reduction in cutting resistance leads to a reduction in a load on the tool machine. Particularly, the value H1 is preferably set to be equal to or less than the chip thickness near the lowermost point 46 of the cutter body.

In contrast, in the sample numbers 11e to 14e and 21e to 26e which are conventional examples, the width of the negative honing and the width of the land have constant values, and a range in which cutting is performed within the width of the negative honing is long at or near the lowermost point 46 of the cutter body. Thus, as compared to the sample numbers 1e to 10e which are the examples, the sample numbers 11e to 14e and 21e to 26e showed higher cutting resistances.

The result of comparisons among the sample numbers 1e to 10e and 15e to 20e which are the examples of the present embodiment was as follows. Using the five kinds with the sample numbers 6e, 15e, 18e, 19e, and 20e, the cutting resistances were compared with one another when the values F1 and the values of F1/F2 were varied while the values H1 and the values of H1/H2 were set to the same condition.

As a result, as the width of the land at the lowermost point 46 of the cutter body was increased, the cutting resistance was increased. Particularly, the difference between the sample numbers 6e and 20e was 112 N.

Using the sample numbers 6e and 17e, the cutting resistances were compared to each other when the values H1 and the values of H1/H2 were varied while the values F1 and the values of F 1/F2 were set to the same condition.

As a result, the difference therebetween was 172 N. Therefore, it can be said that the width of the negative honing at the lowermost point 46 of the cutter body has a greater influence on the reduction in cutting resistance.

Each of the sample numbers 15e and 16e is a case where the width of the negative honing was continuously increased from the above-described lowermost point, toward the outer periphery side, to the connecting portion, and the width of the land was set to be constant. In view of comparison therebetween, the one with a smaller negative honing width at the lowermost point 46 of the cutter body had a smaller cutting resistance value.

The above-described effects of a reduction in cutting resistance are shown as rates (%) of reduction in cutting resistance in the section of rate of reduction in cutting resistance (%) in Table 5. Note that a rate (%) of reduction in cutting resistance was obtained from the following expression between the inserts having the same tool diameter and the same insert diameter in the samples numbers 1e to 10e and the sample numbers 15e to 20e which are the examples of the present embodiment and the sample numbers 11e to 14e and 21e to 26e which are the conventional examples.

Table 5 shows the rates of reduction in cutting resistance (relative values) of the sample numbers 1e to 10e and 15e to 20e obtained by the following computation expression, respectively taking the rates of reduction in cutting resistance in the conventional examples as reference values (0 %).

Rate (%) of reduction in cutting resistance = {(cutting resistance value in conventional example) - (cutting resistance value in example of present embodiment)} / (cutting resistance value in conventional example) $\times$ 100

The evaluation for chipping resistance of a main cutting edge was made by visually checking the presence/absence of chipping thereof during the process for the cutting time of 30 minutes. The results of the tests for evaluating chipping resistance are shown in the section of chipping resistance in Table 5.

From Table 5, since all of the five inserts in each of the sample numbers 1e to 10e and 15e to 20e which are the examples of the present embodiment and the sample numbers 11e to 14e and 21e to 26e which are the conventional examples could perform processing without chipping during the cutting for 30 minutes, the "○" marks were shown in the section of evaluation for chipping resistance in Table 5.

From the above-described cutting test results, it became clear that the sample numbers 1e to 10e and 15e to 20e, which are the examples of the present embodiment showed favorable results in the overall judgment on the two items, i.e., cutting resistance and chipping resistance (see the rightmost section in Table 1), and it is possible to reduce cutting resistance without deteriorating chipping resistance. Therefore, it can be seen that those according to the examples of the present embodiment are high-performance indexable milling cutters for cutting process as compared to the conventional examples.

As described above, each of the indexable milling cutters according to the first to third embodiments described above is an indexable milling cutter including the insert attached thereto which can be attached to and detached from the cutter body and which has a polygonal plate or round shape as seen in a plan view. In this insert, the negative honing and the land are provided on the rake face of the main cutting edge, and the rounded corner cutting edge is formed at the corner portion.

Moreover, it is an indexable milling cutter which achieves a reduction in cutting resistance while maintaining the chipping resistance of the main cutting edge by making the main cutting edge of the insert have the lowermost point with respect to the rotation axis direction of the cutter body when the insert is attached to the cutter body and by forming the width of the negative honing or the widths of the negative honing and the land so as to gradually increase from the lowermost point toward the outer periphery side direction with respect to the rotation axis direction of the cutter body.

INDUSTRIAL APPLICABILITY

The indexable milling cutter according to the present invention makes it possible to reduce cutting resistance while maintaining the chipping resistance of the main cutting edge of the cutting insert. Particularly, it can be effectively provided for highly efficient high-feed processing by the indexable milling cutter such that the overhang is 200 mm or more or the above-described value of (L/D1) is 4 or more.

DESCRIPTION OF REFERENCE NUMERALS

1 = cutter body
1a = cutter body
1b = cutter body
2 = insert
2a = insert
2b = insert
2c = insert

5 = corner cutting edge
6 = main cutting edge
7 = peripheral cutting edge
8 = lowermost point
9 = connecting portion
10 = intersection point
11 = base
12 = rake face
13 = flank face
15 = negative honing
16 = land
17 = breaker groove
18 = groove (U-shaped groove)
19 = rake face
20 = cutter body
21 = insert
22 = corner portion
23a = short side
23b = long side
24a = flank face on the side of the short side
24b = flank face on the side of the long side
25 = rake face
26 = main cutting edge
27 = lower surface
31 = lowermost point
32 = most peripheral point
33a = highest point
33b = lowest point
34 = negative honing
35 = land
37 = breaker groove
40 = cutter body
41 = insert
42 = attachment hole
43 = clamp screw
44 = clamp piece
45 = main cutting edge
46 = lowermost point
47 = minor cutting edge
48 = connecting portion
49 = lower surface
50 = upper surface (rake face)
51 = side surface (flank face)
52 = negative honing
53 = land
54 = breaker groove

**Claims**

1. An indexable milling cutter, comprising an insert (2) attached thereto, the insert (2) being adapted to be attached to and detached from a cutter body (1) and having a polygonal plate shape as seen in a plan view,

   wherein a ridge line portion of a main cutting edge (6) of the insert (2) forms a protruding shape in an outward direction of the insert (2);
   **characterized in that** a negative honing (15), a land (16), and a breaker groove (17) are provided on a rake face (12) of the main cutting edge (6); and a generally rounded corner cutting edge (5) is formed in a connecting portion (9) between two adjacent sides;

wherein the shape of the land is a planar shape or a protruding shape;
wherein, when the insert (2) is attached to the cutter body (1), the main cutting edge (6) of the insert (2) has a lowermost point (8) of the cutter body (1);
wherein the width of the negative honing (15) is formed so as to gradually increase from the lowermost point (8) of the cutter body (1) toward the connecting portion (9); and
wherein the width of the land (16) is formed so as to gradually increase from the lowermost point (8) of the cutter body (1) toward the connecting portion (9).

2. The indexable milling cutter according to claim 1,

wherein the following relationships are satisfied:

$$0.03 \text{ mm} \le H1 \le 0.10 \text{ mm}, 0.15 \le H1/H2 \le 0.50,$$

$$0.03 \text{ mm} \le F1 \le 0.10 \text{ mm}, 0.15 \le F1/F2 \le 0.50,$$

where H1 denotes the width of the negative honing (15) and F1 denotes the width of the land (16) at the lowermost point (8), and H2 denotes the width of the negative honing (15) and F2 denotes the width of the land (16) at the connecting portion (8).

3. The indexable milling cutter according to any one of claims 1 to 2, wherein a plurality of grooves (18) elongated in a direction generally perpendicular to a tangent of the main cutting edge (6) are provided on an upper surface of the insert (2) in the vicinity of the main cutting edge (6); and portions between the grooves (18) are used as rake faces (19).

4. The indexable milling cutter according to claim 3, wherein the following relationships are satisfied:

$$0.20 \text{ mm} \le RW \le 0.50 \text{ mm}, 1.20 \le RW/UW \le 2.50,$$

$$UH \le 0.60 \text{ mm}, 0.25 \text{ mm} \le UL \le 0.80 \text{ mm},$$

where, at the connecting portion (9), RW denotes the width of the rake face between the grooves (18), UW denotes the transverse width of the groove (18), UH denotes the longitudinal length of the groove (18), and UL denotes the length from the ridge line portion of the main cutting edge (6) to the end of the groove (18).

**Patentansprüche**

1. Fräswerkzeug mit Wendeschneiden, das einen daran angebrachten Einsatz (2) umfasst, wobei der Einsatz (2) dazu ausgebildet ist, um an einem Schneidkörper (1) angebracht zu werden und von diesem gelöst zu werden, und in einer Draufsicht gesehen eine polygonale Tellerform aufweist,

wobei ein Gratlinienbereich einer Hauptschneidekante (6) des Einsatzes (2) in einer Richtung von dem Einsatz (2) nach außen eine vorstehende Form ausbildet;
**dadurch gekennzeichnet, dass** eine Schneidlippe (15), ein Schneidkantenrücken (16) und eine Spannut (17) an einer Spanfläche (12) der Hauptschneidekante (6) bereitgestellt sind; und eine im Wesentlichen abgerundete Eckenschneidkante (5) in einem Verbindungsbereich (9) zwischen zwei nebeneinander liegenden Seiten ausgebildet ist;
wobei die Form des Schneidkantenrückens (16) eine planare Form oder eine vorstehende Form ist;
wobei die Hauptschneidekante (6) des Einsatzes (2), wenn der Einsatz (2) an dem Schneidkörper (1) angebracht ist, einen am tiefsten gelegenen Punkt (8) des Schneidkörpers (1) aufweist;
wobei die Breite der Schneidlippe (15) derart ausgebildet ist, dass sie allmählich von dem am tiefsten gelegenen Punkt (8) des Schneidkörpers (1) aus in Richtung des Verbindungsbereichs (9) zunimmt; und
wobei die Breite der Schneidlippe (16) derart ausgebildet ist, dass sie allmählich von dem am tiefsten gelegenen Punkt (8) des Schneidkörpers (1) aus in Richtung des Verbindungsbereichs (9) zunimmt.

**2.** Fräswerkzeug mit Wendeschneiden gemäß Anspruch 1,

wobei die folgenden Relationen erfüllt sind:

$$0{,}03 \text{ mm} \leq H1 \leq 0{,}10 \text{ mm}, \ 0{,}15 \leq H1/H2 \leq 0{,}50,$$

$$0{,}03 \text{ mm} \leq F1 < 0{,}10 \text{ mm}, \ 0{,}15 \leq F1/F2 \leq 0{,}50,$$

wobei H1 die Breite der Schneidlippe (15) und F1 die Breite des Schneidkantenrückens (16) an dem am tiefsten gelegenen Punkt (8) angibt, und wobei H2 die Breite der Schneidlippe (15) und F2 die Breite des Schneidkantenrückens (16) an dem Verbindungsbereich (8) angibt.

**3.** Fräswerkzeug mit Wendeschneiden gemäß einem der Ansprüche 1 bis 2, wobei eine Vielzahl von Nuten (18), die sich in einer Richtung erstrecken, die im Wesentlichen senkrecht zu einer Tangente der Hauptschneidekante (6) verläuft, an einer oberen Oberfläche des Einsatzes (2) in der Nähe der Hauptschneidekante (6) bereitgestellt ist; und wobei Bereiche zwischen den Nuten (18) als Spanflächen (19) verwendet werden.

**4.** Fräswerkzeug mit Wendeschneiden gemäß Anspruch 3, wobei die folgenden Relationen erfüllt sind:

$$0{,}20 \text{ mm} < RW < 0{,}50 \text{ mm}, \ 1{,}20 < RW/UW < 2{,}50,$$

$$UH < 0{,}60 \text{ mm}, \ 0{,}25 \text{ mm} < UL < 0{,}80 \text{ mm},$$

wobei, an dem Verbindungsbereich (9), RW die Breite der Spanfläche zwischen den Nuten (18) angibt, UW die transversale Breite der Nut (18) angibt, UH die longitudinale Länge der Nut (18) angibt und UL die Länge von dem Gratlinienbereich der Hauptschneidefläche (6) aus bis zu dem Ende der Nut (18) hin angibt.

## Revendications

**1.** Outil de fraisage indexable, comprenant un insert (2) attaché à celui-ci, l'insert (2) étant adapté à être attaché sur et détaché depuis un corps d'outil (1) et ayant la forme d'une plaque polygonale lorsqu'il est vu dans une vue en plan,

dans lequel une portion de ligne de crête d'un bord de coupe principal (6) de l'insert (2) forme une forme en projection dans une direction vers l'extérieur de l'insert (2) ;
**caractérisé en ce qu'**un rodage négatif (15), une portée (16), et une rainure de rupture (17) sont prévus sur une face de dégagement (12) du bord de coupe principal (6) ; et un bord de coupe à coin généralement arrondi (5) est formé dans une portion de connexion (9) entre deux côtés adjacents ;
dans lequel la forme de la portée est une forme plane ou une forme en projection ;
dans lequel, quand l'insert (2) est attaché sur le corps d'outil (1), le bord de coupe principal (6) de l'insert (2) comporte un point le plus bas (8) du corps d'outil (1) ;
dans lequel la largeur du rodage négatif (15) est formée de manière à augmenter progressivement depuis le point le plus bas (8) du corps d'outil (1) vers la portion de connexion (9) ; et
dans lequel la largeur de la portée (16) est formée de manière à augmenter progressivement depuis le point le plus bas (8) du corps d'outil (1) vers la portion de connexion (9).

**2.** Outil de fraisage indexable selon la revendication 1,

dans lequel les relations suivantes sont satisfaites :

$$0{,}03 \text{ mm} < H1 < 0{,}10 \text{ mm}, \ 0{,}15 < H1/H2 < 0{,}50,$$

$$0,03 \text{ mm} < F1 < 0,10 \text{ mm}, \; 0,15 < F1/F2 < 0,50,$$

dans lesquelles H1 désigne la largeur du rodage négatif (15) et F1 désigne la largeur de la portée (16) au niveau du point le plus bas (8), et H2 désigne la largeur du rodage négatif (15) et F2 désigne la largeur de la portée (16) au niveau de la portion de connexion (8).

3. Outil de fraisage indexable selon l'une quelconque des revendications 1 et 2,
dans lequel une pluralité de rainures (18) allongées dans une direction généralement perpendiculaire à une tangente du bord de coupe principal (6) sont prévues sur une surface supérieure de l'insert (2) au voisinage du bord de coupe principal (6) ; et des portions entre les rainures (18) sont utilisées à titre de faces de dégagement (19).

4. Outil de fraisage indexable selon la revendication 3,

dans lequel les relations suivantes sont satisfaites :

$$0,20 \text{ mm} < RW < 0,50 \text{ mm}, \; 1,20 < RW/UW < 2,50,$$

$$UH < 0,60 \text{ mm}, \; 0,25 \text{ mm} < uL < 0,80 \text{ mm},$$

dans lesquelles, au niveau de la portion de connexion (9), RW désigne la largeur de la face de dégagement entre les rainures (18), UW désigne la largeur transversale de la rainure (18), UH désigne la longueur longitudinale de la rainure (18), et UL désigne la longueur depuis la portion de ligne de crête du bord de coupe principal (6) jusqu'à l'extrémité de la rainure (18).

# FIG.1

# FIG.2

# FIG.3(a)

# FIG.3(b)

# FIG.4

*FIG.5*

## FIG.6

*FIG.7*

# FIG.8

# FIG.9

# FIG.10

# FIG.11

# FIG.12

# FIG.13

# FIG.14

# FIG.15

# FIG.16

*FIG.17*

# FIG.18

## FIG.19

## FIG.20

*FIG.21*

# FIG.22

EP 2 412 464 B1

# FIG.23

# FIG.24

# FIG.25

# FIG.26

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000005921 A
- JP 2002046002 A
- JP 2002192407 A
- JP 2008000837 A
- JP 2008207273 A
- JP HEI4093110 A
- JP HEI9225724 A